# EUROPEAN PATENT APPLICATION

(11) **EP 4 814 891 A1**
(43) Date of publication of application: **30.09.2026**
(21) Application number: 26168627.3
(22) Date of filing: 27.03.2026
(51) Int. Cl.: G06V 10/774, B41J 3/407, G06K 15/02, G06V 10/82, H04N 1/387

(54) **METHOD, APPARATUS AND DEVICE FOR PRINTING IMAGES ON SUBSTRATE BASED ON AI VISION**

(30) Priority: 27.03.2025 CN 202510376209; 27.03.2025 CN 202510376210; 15.04.2025 CN 202510465576; 15.05.2025 CN 202510625163; 27.05.2025 CN 202521061871 U; 29.05.2025 CN 202510703714; 29.05.2025 CN 202510703833; 31.12.2025 CN 202512051435; 31.12.2025 CN 202512051854; 25.03.2026 US 202619578798
(71) Applicant: Shenzhen HosonSoft Co., Ltd, Shenzhen, Guangdong (CN)
(72) Inventor: CHANG, Zhiguo, Shenzhen (CN); ZHANG, Xiaofeng, Shenzhen (CN); PENG, Zhuoran, Shenzhen (CN); XU, Guomin, Shenzhen (CN)
(74) Representative: Chung, Hoi Kan

(57) **Abstract**

The invention relates to the field of intelligent printing technologies and addresses the problem in the prior art that it is difficult to generate a to-be-printed image matching the actual state of a substrate based on its real image information, thereby affecting printing accuracy and stability. The invention provides an AI vision-based method for printing images on a substrate. The method includes: acquiring a base image and a design image corresponding to the substrate to be printed; training a deep learning network model based on the base image and the design image to obtain an image generation model; inputting a real-time image of the substrate into the image generation model to obtain a to-be-printed image; and performing printing on the substrate according to the to-be-printed image. By adopting AI vision algorithms, the generated image can adaptively match the actual state of the substrate, thereby improving printing accuracy and stability.

## Description

### TECHNICAL FIELD

The present invention relates to the field of intelligent printing technologies, and more particularly to a method, an apparatus, and a device for printing images on a substrate based on AI vision.

### BACKGROUND

With the development of digital printing and intelligent manufacturing technologies, substrate image printing technologies have been widely applied in fields such as textile printing, flexible material printing, decorative pattern printing, and industrial pattern inkjet printing. In practical applications, it is generally required to first acquire image information of a surface of a substrate, generate a corresponding printing image based on a preset design pattern, and then accurately print the pattern onto the surface of the substrate by means of an inkjet printing device. To ensure printing quality, related technologies typically perform recognition, processing and matching on the substrate image, such that the generated printing image can be adapted to a current state of the substrate, thereby improving accuracy and consistency of pattern printing.

Existing substrate image printing technologies typically adopt template matching or rule-based algorithms, in which a preset design image is simply superimposed on or transformed according to a captured image of the substrate, and a printing image is then generated for printing. However, since the substrate often exhibits deformation, texture variations, or complex pattern structures in actual production processes, such conventional methods generally rely on manual experience or fixed rules for image processing, making it difficult to effectively extract stable structural features from the substrate image and generate a printing image suitable for printing. As a result, the generated printing image is prone to mismatch with an actual state of the substrate, thereby adversely affecting printing quality and stability.

Existing Chinese Patent with a publication number of CN119814935A discloses an automatic pattern registration printing method for textile fabrics. The method includes acquiring real-time images of a textile fabric entering a printing area by means of a high-definition industrial scanning camera, and performing image preprocessing, AI-based feature recognition, and position adjustment on the acquired images. Specifically, an AI feature template of a design image is first established, and position information of a target pattern is recorded. During printing, images of the textile fabric are acquired and subjected to imaging state analysis. When imaging quality meets a preset requirement, spatial coordinate transformation is performed on the acquired images to align resolution and coordinate systems with those of the design image. Subsequently, pattern features and corresponding coordinate information in the images are identified by an AI-based feature recognition algorithm, and position correction is performed on the target pattern in the design image based on the recognized feature information, thereby generating a printing pattern corresponding to a current state of the textile fabric. The adjusted pattern is then subjected to raster image processing (RIP) to generate printing data for execution of printing.

Although the above patent is capable of realizing automatic pattern registration of textile fabrics through image acquisition and AI-based feature recognition, and improves printing accuracy to a certain extent, it mainly relies on recognition of feature templates of the design image and position correction to adjust the printing pattern. Such an approach has limited capability in analyzing complex texture structures on a surface of a substrate, and it is difficult to stably extract multi-point feature information that reflects structural relationships of patterns from substrate images. It is also difficult to generate a printing image that more accurately matches an actual deformation state of the substrate. As a result, in scenarios involving complex textures or deformed substrates, inaccurate pattern matching is still likely to occur.

Accordingly, there remains a need for a method capable of effectively generating, based on a substrate image, a printing image that matches an actual state of the substrate, so as to achieve stable and accurate substrate image printing.

### SUMMARY

In view of the above, embodiments of the present invention provide a method, apparatus and device for printing images on a substrate based on AI vision, so as to address the problem in the prior art that it is difficult to generate, based on actual image information of a substrate, a printing image that matches a state of the substrate, thereby affecting accuracy and stability of substrate image printing.

According to a first aspect, embodiments of the present invention provide a method for printing images on a substrate based on AI vision, the method comprising:
acquiring base images and design images corresponding to a substrate to be printed;
training a deep learning network model based on the base images and the design images to obtain an image generation model;
inputting a real-time image of the substrate into the image generation model to obtain a printing image; and
performing printing on the substrate based on the printing image.

According to a second aspect, embodiments of the present invention provide an apparatus for printing images on a substrate based on AI vision, comprising:
an image acquisition module configured to acquire base images and design images corresponding to a substrate to be printed;
a model training module configured to train a deep learning network model based on the base images and the design images to obtain an image generation model;
an image processing module configured to input a real-time image of the substrate into the image generation model to obtain a printing image; and
a printing module configured to perform printing on the substrate based on the printing image.

According to a third aspect, embodiments of the present invention provide a printing device, comprising at least one processor, at least one memory, and computer program instructions stored in the memory, wherein the computer program instructions, when executed by the processor, cause the printing device to implement the method according to the first aspect described above.

### Beneficial effect:

The method for printing images on a substrate based on AI vision provided by embodiments of the present invention introduces an AI vision-based image generation mechanism to intelligently process a substrate image printing workflow. Specifically, by acquiring base images of a substrate and corresponding design images, an association between the substrate images and the design images is established, and a deep learning network model is trained based on the association such that the model is capable of learning a mapping relationship between structural features of the substrate images and the design images, thereby obtaining an image generation model. During actual printing, a real-time image of the substrate is input into the image generation model, and the model automatically generates a printing image that matches a current state of the substrate according to the learned mapping relationship, and printing is then performed on the substrate based on the printing image.

Since the image generation model is capable of generating and adapting the printing image based on actual visual information of the substrate, problems of inaccurate image matching caused by reliance on fixed templates or manual adjustment in conventional methods are avoided. As a result, the generated printing image can better adapt to the actual state of the substrate, thereby improving accuracy and stability of substrate image printing, and effectively solving the problem in the prior art that it is difficult to generate, based on actual substrate images, a printing image matching the state of the substrate.

### BRIEF DESCRIPTION OF DRAWINGS

To more clearly illustrate the technical solutions of the embodiments of the present invention, the accompanying drawings required for describing the embodiments will be briefly introduced below. It should be understood that the following drawings merely illustrate some embodiments of the present invention and are not intended to limit the scope of the present invention. For those of ordinary skill in the art, other drawings may be obtained based on these drawings without involving inventive effort, and such drawings shall fall within the scope of the present invention.

The drawings required for describing the embodiments are briefly introduced below:
FIG. 1 is a schematic diagram of an overall process of a method for printing images on a substrate based on AI vision according to Embodiment 1 of the present invention;
FIG. 2 is a schematic diagram of a whole-pattern segmentation manner according to Embodiment 1 of the present invention;
FIG. 3 is a schematic diagram of a row-wise pattern segmentation manner according to Embodiment 1 of the present invention;
FIG. 4 is a schematic diagram of a smallest repeating unit segmentation manner according to Embodiment 1 of the present invention;
FIG. 5 is a schematic diagram of stitching to form base images according to Embodiment 1 of the present invention;
FIG. 6 is a schematic diagram of one example of base images according to Embodiment 1 of the present invention;
FIG. 7 is a schematic diagram of design images corresponding to the base images in FIG. 5 according to Embodiment 1 of the present invention;
FIG. 8 is a schematic diagram of a first shape mask corresponding to the base images in FIG. 5 according to Embodiment 1 of the present invention;
FIG. 9 is a schematic diagram of another example of base images according to Embodiment 1 of the present invention;
FIG. 10 is a schematic diagram of design images corresponding to the base images in FIG. 9 according to Embodiment 1 of the present invention;
FIG. 11 is a schematic diagram of a first shape mask corresponding to the base images in FIG. 9 according to Embodiment 1 of the present invention;
FIG. 12a is a schematic diagram of one example of base images according to Embodiment 1 of the present invention;
FIG. 12b is a schematic diagram of design images corresponding to the base images in FIG. 12a;
FIG. 12c is a schematic diagram of a first shape mask corresponding to FIG. 12a;
FIG. 12d is a schematic diagram of a training color mask corresponding to FIG. 12c;
FIG. 13a is a schematic diagram of a first base shape mask corresponding to a training acquired image in FIG. 6;
FIG. 13b is a schematic diagram of a first full shape mask corresponding to a training acquired image in FIG. 9;
FIG. 14 is a schematic diagram of a first printing image and a second printing image according to Embodiment 1 of the present invention;
FIG. 15 is a schematic diagram of acquiring base images and design images corresponding to a substrate to be printed according to Embodiment 1 of the present invention;
FIG. 16 is a schematic diagram of a feature extraction process based on image block input according to Embodiment 1 of the present invention;
FIG. 17 is a schematic diagram of an image block generation and ROI region selection process based on a patch sliding window according to Embodiment 1 of the present invention;
FIG. 18 is a schematic diagram of an image feature point searching and aggregation process under an anchor-free guidance mode according to Embodiment 1 of the present invention;
FIG. 19 is a schematic diagram of a control point generation, searching, and aggregation process based on anchor guidance according to Embodiment 1 of the present invention;
FIG. 20 is a schematic diagram of inputting a real-time image of the substrate into the image generation model to obtain a printing image according to Embodiment 1 of the present invention;
FIG. 21 is a structural block diagram of an apparatus for printing images on a substrate based on AI vision according to Embodiment 2 of the present invention;
FIG. 22 is a schematic structural diagram of a printing device according to Embodiment 3 of the present invention.

### Reference numerals:

11 - Input Image; 12 - Image Patch Segmentation Module; 13 - High-Dimensional Feature Map; 14 - ROI Cropping Region; 15 - Local Feature Map Set; 16 - Local Dimensionality-Reduced Feature Vector; 17 - Global Dimensionality-Reduced Feature Map; 21 - Patch Size Schematic; 22 - Stride Size Schematic; 23 - Selected ROI Region; 24 - Image Block Set; 31 - Candidate Feature Points; 32 - Feature Point Search Region; 33 - Feature Point Matching Position; 41 - Query Anchor Point; 42 - Anchor Point ROI Region; 43 - Matched Anchor Point; 44 - Control Point Generation Region; 45 - Newly Added Control Point; 46 - Control Point Set; 51 - Grayscale Image; 52 - Initial Noise Image; 53 - i-Th Step Generated Image; 54 - Printing Image.

### DETAILED DESCRIPTION OF THE EMBODIMENTS

Various aspects and exemplary embodiments of the present invention will be described in detail below. In order to make the objectives, technical solutions and advantages of the present invention more clear and comprehensible, the present invention will be further described in detail below with reference to the accompanying drawings and embodiments. It should be understood that the specific embodiments described herein are provided for purposes of illustration only and are not intended to limit the present invention. Those skilled in the art may implement the present invention without some of the specific details described herein. The following description of the embodiments is provided to enable a better understanding of the present invention by illustrating examples thereof.

It should be noted that relational terms such as "first" and "second" are used herein solely to distinguish one entity or operation from another entity or operation, and do not necessarily require or imply any actual relationship or order between such entities or operations. Furthermore, the terms "comprising," "including," or any variations thereof are intended to cover a non-exclusive inclusion, such that a process, method, article or device that comprises a list of elements does not include only those elements but may include other elements not expressly listed or inherent to such process, method, article or device. In the absence of further limitations, an element defined by the phrase "comprising ..." does not exclude the presence of additional identical elements in the process, method, article or device that includes the element.

### Embodiment 1

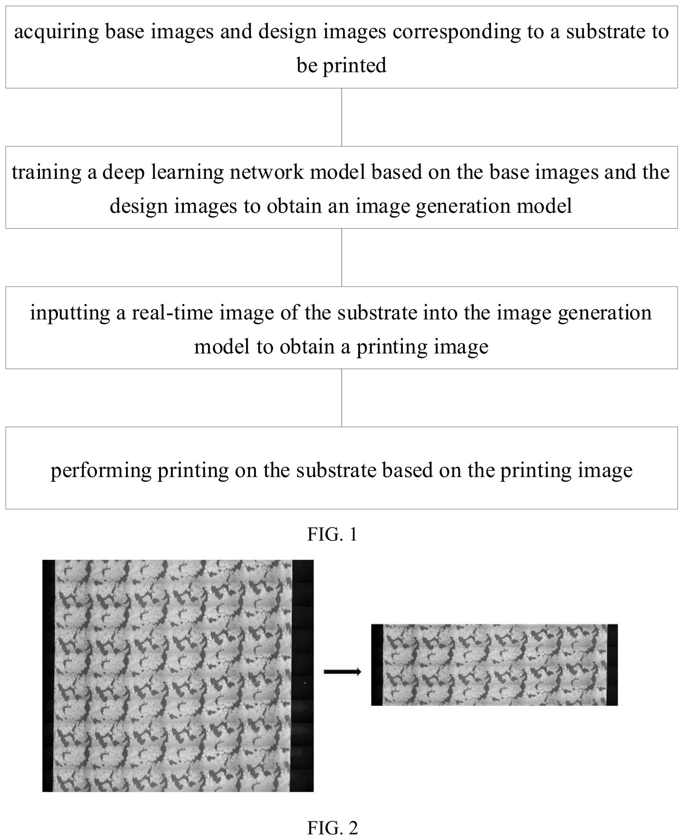

Referring to FIG. 1, an embodiment of the present invention provides a method for printing images on a substrate based on AI vision, which is applied to a printing device. The printing device comprises a printhead, an imaging device, and a printing platform, wherein the printing platform is configured to carry a plurality of substrates.

Specifically, the printing device is configured to implement acquisition of substrate images and inkjet output. The printing device generally comprises the printhead, the imaging device, and the printing platform. The printing platform is configured to carry the plurality of substrates and provide stable support and positioning references for the substrates, such that each substrate remains relatively fixed or moves in an orderly manner along a preset path during the printing process. The imaging device is disposed above or on a side of the printing platform and is configured to acquire images of surfaces of the substrates before the substrates enter a printing region or during the printing process, thereby obtaining real-time image data reflecting actual texture structures and positional states of the substrates, and transmitting the image data to a control system for subsequent image generation processing. The printhead is disposed above a corresponding printing region of the printing platform and is connected to an ink supply system and the control system, and is configured to control inkjet output according to a generated printing image, so as to accurately eject ink droplets onto the substrate surfaces according to a preset resolution and jetting strategy, thereby implementing pattern printing or defect compensation printing.

Through the above configuration, the substrate state information acquired by the imaging device and the printing action executed by the printhead form a closed-loop coordination, such that printing content can be dynamically adjusted according to actual states of the substrates, thereby improving printing accuracy and stability.

The method comprises:
acquiring base images and design images corresponding to a substrate to be printed.

Specifically, the base images may comprise a full image obtained by performing a simple capture of a surface of the substrate, or local region images extracted from an original acquired image according to a preset image segmentation manner. The local region may be a region including a plurality of complete pattern repeating units, or a region including smallest pattern repeating row units or smallest pattern repeating units. When it is necessary to expand a learning scope of the model, the local region images may further be extended based on an image replication strategy and an image stitching strategy, and then used as the base images. The design images are not a fixed static image, but may be generated by performing edge tracing, filling, structure extraction, color construction, or pattern reconstruction on material textures in the base images.
training a deep learning network model based on the base images and the design images to obtain an image generation model.

Specifically, the deep learning network model is trained based on a correspondence between the base images and the design images, such that the model is capable of deriving a printable image from visual information of the substrate. The training is not limited to a single network architecture or a single sample construction manner, but may include a plurality of training paths, all of which aim to obtain the image generation model capable of generating a printing image according to the substrate image.
inputting a real-time image of the substrate into the image generation model to obtain a printing image.

Specifically, the real-time image of the substrate is input into the image generation model, and an image result suitable for printing is output according to a current visual state of the substrate, namely the printing image. After the real-time image is input, the model may directly output the printing image, or may first output intermediate results and then generate the printing image. For example, the model may first output a mask image, a semantic segmentation map, a shape mask set, or a color mask set, and then obtain the final printing image in combination with the design images or template matching results.

For cases where texture structures are correlated with pattern features, the real-time image may be directly input into a single-stage image generation model. For cases where the texture structures are not correlated with the pattern features or the relationship is relatively complex, the real-time image may be input into a multi-stage image generation model, in which structure semantic extraction is first performed and then pattern generation is performed.

Further, this step may be combined with a registration process. Based on a mask image output by the model, the design images may be aligned to match a current state of the substrate through global feature extraction, affine transformation estimation, and local deformable template matching, thereby obtaining the printing image.
performing printing on the substrate based on the printing image.

Specifically, the printing image is applied to an actual printing execution process. The printing is not limited to conventional full-pattern inkjet printing, but generally refers to performing inkjet output on a surface of the substrate according to image content corresponding to the printing image. The printing may be conventional pattern printing directly based on the printing image, or, when a local defect of the substrate is detected, may include generating an inpainted image by using an image inpainting model, and then performing edge transition processing and rasterization processing to form inpainting print data, so as to perform inkjet compensation printing on a defect region.

In an optional embodiment, acquiring the base images and the design images corresponding to the substrate to be printed comprises:
acquiring a preset image segmentation manner and an original acquired image of the substrate, wherein the preset image segmentation manner comprises a whole-pattern segmentation manner, a row-wise pattern segmentation manner, and a smallest repeating unit segmentation manner;
segmenting the original acquired image according to the preset image segmentation manner to obtain the base images, wherein the base images comprise a region image having a plurality of complete pattern repeating units, a region image having smallest pattern repeating row units, and a region image having smallest pattern repeating units.

Specifically, during acquisition of the base images corresponding to the substrate to be printed, three preset image segmentation manners are employed to adapt to different model training requirements and printing accuracy requirements.

As shown in FIG. 2, a first manner is a whole-pattern segmentation manner, in which a region image including a plurality of complete pattern repeating units is directly selected from the original acquired image of the substrate as the base images. This manner provides the richest pattern repeating unit samples, enabling the artificial intelligence to learn more pattern variation features during the training process, thereby improving model accuracy. However, due to a relatively large segmentation range, a longer image processing time is required, and thus this manner is suitable for scenarios requiring extremely high color matching accuracy and pattern precision.

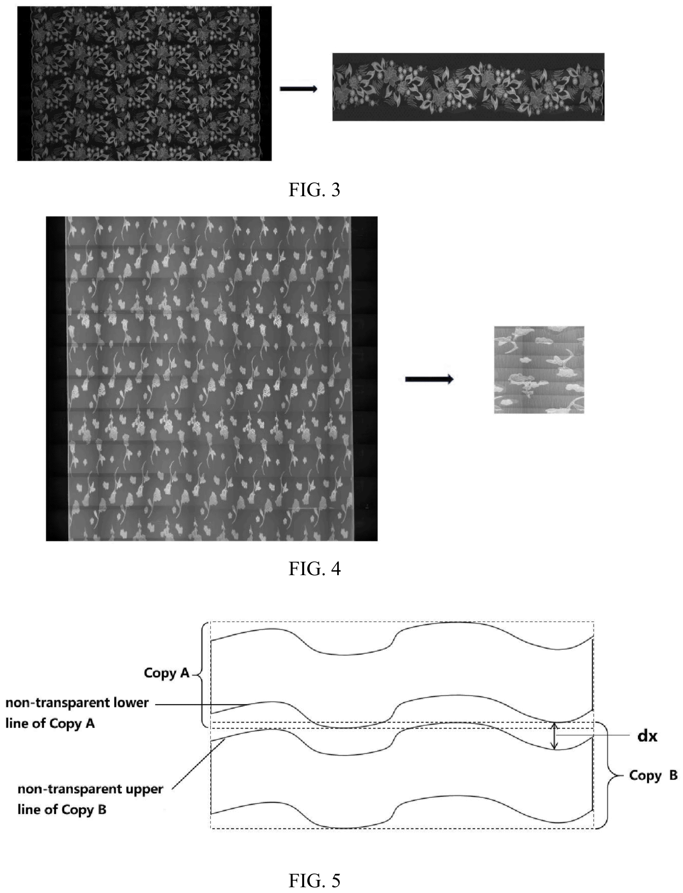

As shown in FIG. 3, a second manner is a row-wise pattern segmentation manner, in which a region image including smallest pattern repeating row units is selected from the original acquired image of the substrate as the base images. This manner ensures integrity of individual pattern repeating units, and larger images may be formed through vertical stitching, thereby satisfying requirements of the model for learning continuous patterns. Compared with the first manner, this manner achieves a better balance between training accuracy and processing time, and is suitable for most printing scenarios requiring a certain level of color and pattern accuracy without extremely high precision requirements.

As shown in FIG. 4, a third manner is a smallest repeating unit segmentation manner, in which a smallest pattern repeating unit is extracted from the original acquired image of the substrate as the base images. This manner features the shortest processing time, and after appropriate correction, larger images may be formed through stitching in multiple directions, thereby satisfying basic requirements of the model for learning pattern repeating characteristics.
performing edge outlining and/or filling processing on material textures in the base images to determine the design images.

Specifically, after obtaining the base images, contours of pattern elements in the base images are outlined according to texture structures on surfaces of the substrates, such that the contours form closed contour lines along texture edges, thereby accurately representing pattern structure boundaries in the base images. After contour outlining is completed, filling processing is performed on regions inside the contours. A filling manner may be adjusted according to different material texture characteristics. For example, gradient filling may be constructed based on yarn color variations of jacquard fabrics, texture-direction-matched filling may be performed based on embroidery stitch directions, or simulated texture distributions may be generated based on surface texture characteristics of leather.

For regions in the base images where texture discontinuities, blurring, or noise interference exist, missing textures may further be supplemented by combining high-resolution sampled images or manual retouching, thereby improving integrity of pattern structures. After the above edge tracing and filling processing, the design images are formed, wherein the design images maintain consistent pixel dimensions and spatial coordinate relationships with the base images, thereby ensuring pixel-level correspondence between the two during subsequent deformation processing and training of the deep learning network model.

In an optional embodiment, segmenting the original acquired image according to the preset image segmentation manner to obtain the base images comprises:
segmenting the original acquired image according to the preset image segmentation manner to obtain local region images;
acquiring, according to the preset image segmentation manner, an image replication strategy and an image stitching strategy corresponding to the local region images, wherein the image replication strategy is used to determine a number of replications or a number of replication frames, and the image stitching strategy is used to determine a stitching direction, a stitching sequence, and a stitching layout;
replicating and stitching the local region images according to the image replication strategy and the image stitching strategy to obtain the base images.

Specifically, the original acquired image is segmented according to the preset image segmentation manner to obtain local region images. In order to further improve a learning effect of the deep learning network model and enable the model to more comprehensively capture variation patterns of pattern repetition, after obtaining the local region images, a learning region is expanded through replication and stitching.

For example, when the preset image segmentation manner is the whole-pattern segmentation manner, the selected local region images include a plurality of complete pattern repeating units. In order to further increase a training data amount of the model and enhance adaptability of the model, the local region images are expanded before deformation processing. First, the local region images are replicated to obtain identical image copies. Then, the copies are stitched with the local region images along a vertical direction to form new base images including more pattern repeating units. Such a stitching manner enlarges a size of training samples while maintaining pattern continuity, such that the model can cover more feature information during training, thereby improving recognition and matching capabilities.

When the preset image segmentation manner is the row-wise pattern segmentation manner, the selected local region images are region images including smallest pattern repeating row units. In this case, according to a width and a height of the local region images, a size of a first target image is determined such that a width of the first target image is consistent with the width of the local region images and a height of the first target image is twice the height of the local region images. The first target image is created to provide sufficient space for stitching, such that two identical image copies may be arranged in a vertical direction to form a continuous stitching effect. The first target image is configured to carry two replicated images, so that the replicated images may be pasted at appropriate positions to implement a complete vertical replication and stitching process.

The local region images are replicated twice to generate a first replicated image and a second replicated image, respectively. The two replicated images have pixel information identical to that of the original local region images, maintain the same width and height, and preserve all image content and transparent region information. According to a relative positional relationship between the first replicated image and the first target image, an upper-left vertex of the first replicated image is aligned with an upper-left vertex of the first target image, and a pasting operation is performed, so that the first replicated image completely occupies an upper half of the first target image and is correctly placed at an initial position of the first target image. According to a relative positional relationship between the second replicated image and the first target image, an x-coordinate of an upper-left vertex of the second replicated image is aligned with an x-coordinate of the upper-left vertex of the first target image, and a pasting operation is performed. Meanwhile, when determining a y-coordinate of the upper-left vertex of the second replicated image, it is ensured that the y-coordinate is smaller than the height of the local region images, that is, it is ensured that the second replicated image is located in a lower half of the first target image rather than being directly aligned with a bottom of the first replicated image. By selecting an appropriate y-coordinate, the stitching effect is optimized, such that the two images remain as coherent and smooth as possible at a stitching seam, thereby reducing visual discontinuities or unnatural transitions.

In a pixel coordinate system of the first target image, for an x-coordinate of each target pixel, scanning is performed upward row by row from a last row of the first replicated image until a first non-transparent pixel is found. A y-coordinate position of the non-transparent pixel is taken as a lower edge position of the first replicated image in a corresponding pixel column. This is intended to determine, at different x-coordinates, lowest visible pixels of the first replicated image, thereby providing a reference for subsequent stitching calculation. Through this operation, a visible region boundary of the first replicated image may be accurately obtained, so that a docking relationship with the second replicated image may be calculated. For each x-coordinate of each target pixel in the first target image, scanning is performed downward row by row from a first row of the second replicated image to find a first non-transparent pixel, and a y-coordinate thereof is recorded as an upper edge position of the second replicated image in the corresponding pixel column. This process is intended to determine an uppermost visible pixel of the second replicated image, so that the uppermost visible pixel can be stitched with a lower edge of the first replicated image as seamlessly as possible. By identifying these upper edge pixel positions, an image alignment strategy may be further optimized, thereby ensuring that a visual effect of a stitched image is natural and smooth.

The above scanning process is repeatedly performed for all pixel columns in the first target image, and a lower edge position of the first replicated image and an upper edge position of the second replicated image in each pixel column are recorded to establish complete edge mapping information. For each pixel column, a vertical distance between the two edge positions is calculated by a difference between corresponding y-coordinates, so as to quantify stitching discontinuity, wherein a smaller value indicates a better stitching effect and a larger value indicates more obvious misalignment.

The vertical distances of all pixel columns are accumulated to calculate an overall stitching distance value of the target image at a corresponding pixel row. This step is intended to evaluate smoothness of stitching in a global range by accumulating all local errors so as to determine an overall stitching effect. A smaller distance value indicates a better stitching effect, whereas when an error is relatively large, a stitching position needs to be adjusted to optimize image continuity. For all possible stitching y-coordinate positions in the first target image, corresponding overall stitching distance values are calculated, respectively. This step is intended to traverse all possible stitching positions and calculate a stitching error of each position to form a set of error data. By comparing these distance values, an optimal stitching position may be found, such that a visual effect of a final stitched image is most natural and possible abrupt transitions or misalignment phenomena are reduced. All calculated overall stitching distance values are compared to find a minimum distance value, and a stitching y-coordinate position corresponding to the minimum distance value is recorded. This step is intended to select an optimal stitching point based on an error minimization principle, such that seams of the two replicated images are stitched as naturally as possible. The selected optimal stitching position is used as a final pasting position of the second replicated image, thereby ensuring continuity and aesthetics of the stitched image as a whole. According to the calculated optimal stitching position, the second replicated image is pasted at a designated position of the first target image, such that an upper edge of the second replicated image is aligned with a lower edge of the first replicated image to minimize stitching error. After the pasting is completed, visual integrity of the first target image is optimized, and the stitched image serves as the base images shown in FIG. 5, which may be used for further replication and stitching or subsequent processing.

When the preset image segmentation manner is the smallest repeating unit segmentation manner, the local region images are region images including smallest pattern repeating units. First, the local region images are replicated a plurality of times to obtain a plurality of identical image frames. These replicated image frames, together with the original local region images, are sequentially arranged and stitched in a horizontal direction, thereby forming a relatively wide stitched image. Next, the stitched image is replicated in a vertical direction and is arranged and stitched multiple times, such that the finally formed base images are expanded in both directions. In this way, the base images not only preserve an original structure of the smallest pattern repeating units in local regions, but also present a uniform arrangement over a larger range, such that subsequent deformation processing does not destroy regularity of an overall pattern.

In an optional embodiment, training the deep learning network model based on the base images and the design images to obtain the image generation model comprises:
performing deformation processing on the base images and the design images to determine deformed image pairs.

Specifically, before performing deformation processing on the substrate, deformation control parameters are first set to ensure that generated deformed images can effectively simulate deformation conditions of the substrate in an actual production process. The deformation control parameters comprise grid resolution and deformation intensity. The grid resolution determines a granularity of a deformation field, that is, the base images and the design images are divided into a plurality of grids, and each grid point may independently undergo displacement, so as to more precisely simulate local deformation. Selection of the grid resolution is balanced between accuracy and computational cost. A higher resolution can describe local deformation more precisely, but increases computational overhead. The deformation intensity determines a maximum displacement range of each grid point, and may be set based on actual deformation amplitudes of the substrate in production, for example, by measuring deformation data of a fabric under different stretching states to determine a reasonable deformation intensity range.

After the deformation control parameters are determined, random deformation processing is performed on the base images and the design images to simulate various irregular elastic deformations occurring during a printing process. Specifically, according to the grid resolution, the base images and the design images are divided into a plurality of grids, and a random displacement value is assigned to each grid point to generate a random displacement field. Such random deformation processing can generate a variety of deformation samples, enabling the deep learning network model to learn richer deformation patterns during training, thereby improving adaptability of the model to complex deformations. As a result, more accurate deformation compensation can be achieved in an actual printing process, thereby improving registration accuracy.

Specifically, the base images and the design images are first divided into a plurality of regular grid units according to a preset grid resolution, and initial coordinate bases are established by taking vertices of the grid units as grid points, wherein grid density is used to balance deformation granularity and computational cost. Subsequently, displacement values following a Gaussian random distribution are assigned to the grid points to simulate random deformations of the substrate caused by factors such as tension variation and material elasticity differences during the printing process. The discrete grid point displacements are then extended to the entire images by using bilinear interpolation, thin-plate spline interpolation, or B-spline interpolation, thereby obtaining initial random displacement fields of pixel points in horizontal and vertical directions.

Considering that independent sampling may lead to local displacement discontinuities, Gaussian filtering is further performed on the displacement fields to obtain smooth displacement fields with continuous transitions. Based on the smooth displacement fields, target positions of the pixel points after deformation are calculated, and positional mapping relationships between original positions and target positions are established. During image deformation, a backward mapping manner is preferably adopted, and pixel values are resampled by using bilinear interpolation, B-spline interpolation, or nearest-neighbor interpolation, so as to respectively obtain a deformed base image and a deformed design image generated under identical deformation parameters, thereby forming the deformed image pairs.

Further, multiple groups of deformed image pairs with different deformation patterns and deformation intensities may be generated by adjusting the grid resolution, displacement intensity, and smoothing parameters, so as to enhance richness of training samples and adaptability of the deep learning network model to actual deformation conditions. Finally, sizes of the generated deformed images are detected, and when the sizes of the deformed images do not meet a preset size range, size adjustment is performed by using interpolation-based scaling, such that the output deformed image pairs satisfy unified data standards for subsequent model training and analysis.
performing uniform grid sampling and random position sampling on the deformed image pairs, respectively, to construct a plurality of training image pairs; and
training the deep learning network model according to the training image pairs to obtain the image generation model.

Specifically, the deformed image pairs refer to the base images and the design images subjected to identical deformation processing, and the two maintain a one-to-one correspondence in spatial positions. Therefore, sub-images subsequently cropped therefrom can remain strictly paired. On this basis, each pair of deformed large images is used as a basis, and multiple cropping operations are performed by using a fixed-size sliding window. Under the uniform grid sampling manner, a regular grid is established over the entire images and cropping is sequentially performed according to a preset step size so as to cover different spatial regions. Under the random position sampling manner, window coordinates are randomly generated within image ranges, and the base images and the design images are simultaneously cropped at identical positions, thereby obtaining a plurality of training image pairs having consistent structures and corresponding semantics.

After a large number of training image pairs are obtained, sub-images of the base images are used as model inputs, and corresponding sub-images of the design images are used as supervision labels for training through the deep learning network model. Model parameters are continuously updated through error calculation and back propagation, so that the model gradually learns mapping relationships between features of the base images and features of the design images. Meanwhile, since the training samples cover different positions and different deformation conditions, the model can learn corresponding relationships among pattern structures, texture variations, and local deformations, thereby obtaining the image generation model having relatively strong generalization capability, so as to generate, in an actual application, a matched printing image according to the substrate image and improve accuracy and stability of generation results.

In an optional embodiment, performing deformation processing on the base images and the design images to determine the deformed image pairs comprises:
performing deformation processing on the base images and the design images to obtain first deformed images corresponding to the base images and second deformed images corresponding to the design images.

Specifically, deformation samples close to actual production scenarios are actively constructed before model training, such that the deep learning network model not only learns a correspondence between the base images and the design images under ideal conditions, but also learns image mapping relationships when local distortions, non-uniform stretching, and edge offsets occur during processes such as stressing, stretching, spreading, and conveying of the substrate. The deformation processing is not a simple global scaling or rotation of images, but rather, as described above, a non-rigid rearrangement of pixel positions based on preset deformation control parameters. The deformation control parameters generally comprise grid resolution and deformation intensity, wherein the former determines a fineness of deformation field partitioning, and the latter determines a displacement magnitude that each local region may undergo.

In implementation, identical grid structures may be established for the base images and the design images, random displacements are applied to grid vertices or grid points, and discrete displacements are extended to entire images through Gaussian filtering, bilinear interpolation, nearest-neighbor interpolation, or other smoothing mapping methods, thereby forming continuous displacement fields. Subsequently, based on an identical positional mapping relationship, the deformation is respectively applied to the base images and the design images, such that the two remain in pixel-level correspondence after deformation, thereby obtaining the first deformed images and the second deformed images. Through such processing, on one hand, complex and irregular deformations of the substrate in an actual printing process are simulated in advance during training, significantly enriching variation types of training samples and preventing the model from only learning pattern relationships under ideal flat conditions; on the other hand, since the two images are synchronously generated according to an identical deformation rule, spatial alignment between input images and label images is ensured during subsequent window cropping and supervised training, thereby enabling the model to more accurately learn nonlinear compensation relationships from deformed base images to target patterns and improving adaptability and compensation accuracy for random deformations in subsequent registration.
performing encoding processing on horizontal positions and vertical positions of pixel points in the first deformed images, and on horizontal positions and vertical positions of pixel points in the second deformed images, respectively, to obtain original horizontal position encodings and original vertical position encodings.

Specifically, after the first deformed images and the second deformed images are obtained, corresponding spatial position information needs to be established for each pixel in the images, such that the model can perceive a specific distribution of image structures in a plane. In implementation, coordinate values of the pixel points in the horizontal direction and the vertical direction are read based on an image coordinate system, and two position matrices having sizes consistent with the images are respectively constructed, wherein one position matrix records positional relationships in the horizontal direction, and the other position matrix records positional relationships in the vertical direction. Since the encoding processing is performed on both the first deformed images and the second deformed images, the two images maintain a consistent spatial correspondence during the encoding process, thereby obtaining the original horizontal position encodings and the original vertical position encodings. In this manner, spatial structures originally implicit in pixel arrangement orders of the images are explicitly represented, such that the deep learning network model can utilize not only pixel texture information but also spatial structure information in the images when learning image mapping relationships.
performing normalization processing on the original horizontal position encodings and the original vertical position encodings to obtain normalized horizontal position encodings and normalized vertical position encodings.

Specifically, after obtaining the original horizontal position encodings and the original vertical position encodings, value ranges thereof are unified so that position features can stably participate in network training. In implementation, original coordinate ranges are mapped to a unified standard interval by using a linear mapping manner, thereby obtaining the normalized horizontal position encodings and the normalized vertical position encodings. The normalization processing is intended to avoid excessive differences in coordinate values caused by different image sizes or different sampling regions, such that the position features maintain a consistent numerical scale among different training samples, and a dynamic range of the position encodings is more suitable for computation of the deep learning network model. After normalization, relative spatial relationships between horizontal positions and vertical positions are preserved, while numerical representations thereof are more stable, thereby facilitating the deep learning network model to accurately learn relationships between image spatial structures and pattern contents during training.
concatenating the normalized horizontal position encodings and/or the normalized vertical position encodings with original channels of corresponding pixel points to obtain concatenated target pixel points.

Specifically, after the normalization processing is completed, the normalized horizontal position encodings and/or the normalized vertical position encodings are fused with original image channels to form multi-channel input data including spatial position information. In implementation, with pixel points as basic units, the normalized horizontal position encodings and the normalized vertical position encodings at corresponding positions are concatenated to the original image channels along a channel dimension, such that each pixel point simultaneously contains image texture information and an absolute spatial position of the pixel point in the image. The resulting concatenated target pixel points not only retain visual features in the deformed images, but also incorporate explicit spatial structure descriptions, enabling the deep learning network model to utilize both texture features and position features during subsequent training.

When repeated patterns or homomorphic heterochromatic pattern elements exist on the surface of the substrate, the model can distinguish different spatial regions based on the position encodings, thereby generating target images corresponding to different regions while maintaining consistency of pattern structures, and improving accuracy of image generation and printing control under complex deformation conditions.
determining the deformed image pairs according to the concatenated target pixel points.

Specifically, after the concatenated target pixel points are obtained, the pixel points, which have been fused with the original channel information and the position encoding information, are reorganized into complete images according to original spatial arrangement relationships of the pixel points in the images, thereby forming the deformed image pairs for subsequent training. In implementation, based on widths, heights, and pixel coordinate orders of the first deformed images and the second deformed images, the concatenated target pixel points at identical row and column positions are written back into corresponding image matrices point by point, such that reconstructed images remain consistent with original deformation results in spatial distribution, except that channels thereof are expanded from original image channels to multi-channel data including the normalized horizontal position encodings and the normalized vertical position encodings.

The deformed image pairs determined in this manner not only preserve texture morphologies, boundary trends, and local distortion states after elastic deformation processing, but also explicitly embed, into image representations, actual spatial positions of the pixel points, such that the deep learning network model can simultaneously learn corresponding relationships between content features and position features from unified training samples. By virtue of this manner, when the model encounters repeated patterns or regions having identical contours but different spatial positions on the substrate, the model does not make identical determinations merely based on appearance features, but can distinguish the regions in combination with actual coordinate distributions after deformation, thereby improving compensation capability for complex irregular deformations and enhancing accuracy of local pattern positioning and color mapping during registration.

In an optional embodiment, training the deep learning network model based on the base images and the design images to obtain the image generation model comprises:
performing binarization segmentation on the design images to obtain binarized images for distinguishing foreground regions from background regions.

Specifically, binarization segmentation is performed to distinguish foreground regions from complex background regions so as to obtain clear segmentation results. For example, in inkjet printing, foreground content such as text or patterns is assigned a value of 1, while background regions such as white or transparent areas are assigned a value of 0, so that printing is performed only in the foreground regions without affecting the background.

n implementation, the design images may be enhanced using edge tracing and filling to strengthen morphological features of foreground targets, and binarization is performed based on predefined color or grayscale thresholds to classify pixels into foreground and background. For backgrounds with complex textures, segmentation robustness may be improved by combining deep learning-based feature extraction with multi-scale texture information, so as to reduce interference from illumination variation, noise, and texture.

Further, based on the binarization results, foreground regions may be subdivided into multiple target categories to meet complex printing requirements, such as distinguishing text, graphics, or different color elements. The binarized images may also serve as training labels for a deep learning model, enabling improved segmentation accuracy and generalization under complex background conditions.

In an optional embodiment, performing binarization segmentation on the design images to obtain binarized images for distinguishing foreground regions from background regions comprises:
comparing color values of pixel points in the design images with preset color values to determine comparison results;
classifying pixel points having color values identical to the preset color values in the design images as background points to determine background regions;
classifying pixel points having color values different from the preset color values in the design images as foreground points to determine foreground regions; and
obtaining the binarized images according to the background regions and the foreground regions.

Specifically, preset color value sets are constructed based on statistical results or user settings to cover typical foreground and background color ranges. For each pixel in the design images, a similarity between a pixel color value and the preset color values is calculated to classify pixel points matching background colors as background points, and continuity of the background regions is optimized by region growing, morphological processing, or statistical methods to improve segmentation stability.

Subsequently, pixel points not classified as background are determined as foreground points to form foreground regions, and are further refined by edge detection, morphological operations, and connected component analysis, while ambiguous regions may be assisted by a learning model for improved accuracy. Based on the foreground and background classification results, binarized images are generated, and post-processing such as denoising, hole filling, and edge smoothing is performed to obtain segmentation results with clear boundaries and complete structures for subsequent processing.
sampling the binarized images and the base images, respectively, to obtain training image pairs.

Specifically, after the binarized images and the base images are obtained, the two are aligned in spatial dimensions and pixel coordinates, so that corresponding cropping operations can be performed under a unified coordinate system to construct training samples. In implementation, a fixed-size cropping window is used to synchronously crop image regions from the binarized images and the base images, thereby forming one-to-one matched local image pairs, and the window may be moved in a grid manner or randomly sampled to cover different texture and pattern regions.

The constructed training image pairs preserve both real texture information of the base images and pattern structure information of the binarized images, enabling the deep learning model to learn local correspondence relationships between texture and structure, while expanding training samples and improving model stability and generalization capability.
training the deep learning network model according to the training image pairs to obtain the image generation model.

Specifically, after a large number of training image pairs are obtained, sample blocks corresponding to the base images may be used as input data of the deep learning network model, and sample blocks of the corresponding binarized images may be used as supervision labels, so that model parameters are trained in a supervised learning manner. During the training process, the deep learning network model first performs feature extraction on the input sample blocks of the base images, identifies texture structures, boundary information, and local pattern distribution features therefrom, and gradually establishes, during multi-layer feature representation of the network, mapping relationships between these features and foreground regions and background regions in the binarized images. Subsequently, weight parameters in the network are continuously adjusted through a back propagation mechanism, such that model outputs gradually approach the corresponding binarized image labels.

As the training image pairs continuously participate in iterative learning, the model can gradually master identification rules of pattern regions under different substrate texture conditions, and finally form the image generation model capable of automatically inferring pattern region structures according to the base images, thereby providing a reliable basis for subsequent generation of the printing image.

In an optional embodiment, inputting the real-time image of the substrate into the image generation model to obtain the printing image comprises:
inputting the real-time image of the substrate into the image generation model to obtain a mask image.

Specifically, after training of the image generation model is completed, the real-time image of the substrate is input into the image generation model, and a purpose thereof is not to directly generate a final printing image, but to first stably extract foreground regions that need to be fitted from a complex high-texture background in the current substrate image. Real-time image processing focuses on performing pixel-level classification on the substrate image by using a target segmentation model, such that foreground regions are labeled as one class and background regions are labeled as another class, thereby outputting the mask image representing foreground and background segmentation.

Since the target segmentation model is trained based on training samples constructed from the base images and the binarized images, the model has learned difference features between foreground targets and background textures under complex background conditions. Therefore, for substrates such as jacquard fabrics having complex background grids, fine texture variations, and non-rigid deformations, the model can reduce false detections and missed detections that are likely to occur in conventional methods such as edge detection and histogram analysis. The mask image output by the model is essentially a structural image in which foreground and background are accurately separated, and complex background textures in the real-time image are simplified into relatively simple region representations, thereby providing a more stable foreground contour basis for subsequent image registration and improving overall fitting accuracy.
performing global feature extraction on the mask image and the design images to determine first global feature information corresponding to the mask image and second global feature information corresponding to the design images.

Specifically, after the mask image is obtained, the design images are not directly fitted onto the substrate. Instead, global features reflecting overall structural relationships are respectively extracted from the mask image and the design images, so as to form the first global feature information corresponding to the mask image and the second global feature information corresponding to the design images. The global feature extraction mainly serves subsequent overall alignment, focusing on overall contours, primary structural distributions, and key region relationships of images, rather than relying solely on local texture details.

Since the mask image preserves main boundaries and spatial extents of foreground regions on the substrate, and the design images correspond to overall structures of patterns to be fitted, after global feature extraction is respectively performed on the two, geometric characteristics of the two images at a macroscopic level can be converted into comparable global feature information. In this manner, by first establishing a correspondence at an overall structural level, influences of local noise, background interference, and detailed texture differences on registration results can be reduced, thereby preventing subsequent transformation estimation from falling into local mismatches and improving stability of an initial alignment stage.
performing feature matching on the first global feature information and the second global feature information to calculate an initial affine transformation matrix.

Specifically, after the first global feature information and the second global feature information are obtained, corresponding relationships therebetween need to be further established so as to determine how the printing image should be geometrically aligned toward the mask image. Feature matching is performed to identify corresponding points or corresponding relationships between the two sets of global feature information, and the initial affine transformation matrix is calculated on this basis. The matrix represents an overall transformation relationship of the printing image relative to the mask image in terms of translation, rotation, scaling, and shearing, and serves to provide a relatively accurate geometric basis for subsequent initial alignment.

Since the processing sequence adopts global feature extraction, then global feature matching, then initial alignment, and finally local deformable template matching, the initial affine transformation matrix calculated here is not a final result, but is used to first adjust the printing image to a position and orientation generally consistent with those of the mask image, thereby narrowing a search range for subsequent local fine matching.
performing initial alignment on the mask image and the design images according to the initial affine transformation matrix to determine initially aligned design images.

Specifically, after the initial affine transformation matrix is obtained, the design images are first adjusted by using the matrix to a geometric position generally consistent with that of the mask image. A purpose of this step is to complete coarse alignment at a global level. The processing focus is to perform uniform transformation on pixel coordinates in the design images according to the translation, rotation, scaling, and shearing relationships obtained through the foregoing global feature matching, such that the design images are brought as close as possible, in terms of overall contours, principal directions, and spatial positions, to foreground regions corresponding to the mask image. Since the mask image reflects an actual foreground distribution in the current image of the substrate, and the design images reflect an original layout of patterns to be fitted, the initial alignment based on the initial affine transformation matrix enables the design images to move from an original state to an intermediate state generally matching the mask image.

Although the initially aligned design images obtained in this manner cannot yet fully accommodate local non-rigid deformations of the substrate, stable initial conditions are already established for subsequent finer local matching, thereby avoiding influence of large-scale positional deviations that would arise if local searching were directly performed at the beginning, and improving efficiency and stability of an entire registration process.
performing local deformable template matching on the initially aligned design images and the mask image to obtain the printing image.

Specifically, after the initial alignment is completed, local deformable template matching is further performed on the initially aligned design images and the mask image so as to compensate for non-uniform geometric differences caused by bending, stretching, and local distortion of the substrate surface. At this stage, although the design images are generally consistent with the mask image in overall position, local regions may still exhibit boundary misalignment, inconsistent local scaling, or contour deviations. Therefore, the design images and the mask image are divided into finer local regions, feature correspondences are analyzed within each local region, and the initially aligned design images are further adjusted according to deformation conditions of the local regions.

The local deformable template matching may be implemented by performing feature extraction on sub-regions, estimating local deformation parameters, calculating matching errors, and continuously optimizing the matching results. Finally, the printing image is obtained, which more closely fits boundaries and local shapes of foreground regions in the mask image. The resulting printing image not only aligns with the foreground regions of the substrate at a macroscopic level, but also adapts to local non-rigid deformations under complex background conditions at a microscopic level, thereby achieving higher-precision matching between the printing image and actual substrate surface regions, and improving fineness and overall visual quality of printing.

In an optional embodiment, the image generation model comprises a first-stage image generation model and a second-stage image generation model, and training the deep learning network model based on the base images and the design images to obtain the image generation model comprises:
obtaining original semantic segmentation maps corresponding to the base images according to the base images;
performing elastic deformation processing with identical parameters on the base images and the original semantic segmentation maps corresponding to the base images to obtain first training base images and first training semantic segmentation maps;
performing uniform sampling or random sampling on the first training base images and the first training semantic segmentation maps by using sampling windows with identical coordinate values to obtain first sub-training images and second sub-training images, wherein each first sub-training image and the corresponding second sub-training image form a first training image pair; and
using the second sub-training images as supervision labels, and inputting the first training image pairs into a first deep neural network model for training to obtain the first-stage image generation model.

Specifically, in order to improve robustness and learning efficiency of the first-stage image generation model under different printing media and different pattern deformation conditions, it is first necessary to construct a high-quality training image pair dataset for training the first-stage image generation model. Specifically, original semantic segmentation maps corresponding to the base images are first obtained according to the base images. In order to enrich diversity of training samples and enhance adaptability of the model to geometric variations in actual scenarios, such as fabric stretching, imaging distortion, and medium bending, the base images and the corresponding original semantic segmentation maps are further synchronously subjected to elastic deformation processing with identical parameters. The deformation processing may comprise affine transformation operations such as rotation, translation, and scaling, non-linear deformation operations such as elastic deformation based on coordinate grid perturbation, and random noise perturbation operations, so that the images undergo reasonable variations in spatial structures and contour shapes while maintaining semantic consistency of patterns, thereby forming new training samples. The first training base images and the first training semantic segmentation maps generated in this manner have consistent geometric deformations, so that the model can learn robust features of pattern structures under various deformation conditions during a training stage.

Subsequently, a sliding window or random sampling strategy is adopted to perform image patch extraction on the deformed training images by using a sampling window with a fixed size, for example, 256×256 pixels. Specifically, by using identical window parameters and identical initial coordinates, the first training base images and the first training semantic segmentation maps are respectively sampled, so as to ensure that sampling results are completely aligned in spatial positions, thereby generating first sub-training images and second sub-training images, respectively. The sampling process requires that the sampling window adopts identical parameter settings and identical initial coordinates for both the base images and the semantic segmentation maps, so as to ensure that the generated first sub-training images and second sub-training images are fully corresponding in spatial positions and maintain a pixel-level pairing relationship.

In an embodiment, in a specific sampling implementation, a sliding sampling manner may be performed by setting a fixed stride to uniformly traverse the training images, and extracting a plurality of image patches covering an entire image from an upper-left corner to a lower-right corner. This manner is suitable for large-area pattern extraction and ensures that all regions of the training images participate in model learning. For regions having rich structural details, such as pattern edges or regions with strong semantic distinctions, a random sampling manner may be adopted to densely sample image patches in the images with a certain probability.

In addition, in order to enhance structural generalization capability of the model, a hierarchical sampling strategy based on semantic category distribution may also be introduced. Specifically, according to area proportions of respective category regions in the semantic segmentation maps, sampling is performed on regions corresponding to different semantic categories in proportion, so that sampled image patches can relatively evenly cover different pattern categories, such as main pattern regions, boundary regions, and background regions. Such a category-balanced sampling strategy can effectively prevent learning bias caused by imbalanced sample category distributions. Meanwhile, for cases where the sampling window is adjacent to image boundaries, mirror padding or edge extension processing may be adopted to ensure integrity of contents within the sampling window while maintaining semantic consistency.

Finally, the obtained first sub-training images and corresponding second sub-training images are combined to form a first training image pair dataset for training the first-stage image generation model. In the training process, each group of first sub-training images is used as an input of a first deep neural network model, and corresponding second sub-training images are used as supervision labels, thereby constructing a standard supervised image-to-image translation training framework, such that, in a subsequent generation process, when any acquired target base image is input, a semantic segmentation map having clear structures and accurate contours can be output.

The model may adopt, for example, a U-Net structure or a Mask R-CNN structure. U-Net is a classical encoder-decoder convolutional neural network having a symmetrical architecture and a skip connection mechanism, and can effectively preserve spatial detail information of images, thereby satisfying requirements of semantic segmentation tasks for accurate restoration of boundary contours. Mask R-CNN integrates pixel-level segmentation capability on a basis of object detection, and is suitable for segmentation tasks of complex greige fabric images in which multiple structural regions or overlapping patterns coexist. Mask R-CNN can output semantic category labels and corresponding masks thereof, thereby improving performance of the model in fine structural prediction.

In an optional embodiment, obtaining the original semantic segmentation maps according to the base images comprises:
extracting contours of pattern elements in the base images to obtain one or more mask layers;
filling each of the mask layers with colors according to preset semantic categories to obtain semantic masks; and
merging all the semantic masks in layers to obtain the original semantic segmentation maps.

Specifically, contour information of respective pattern elements, such as flowers, leaves, and background textures, are first extracted from the base images. Each type of pattern element corresponds to a semantic category, for example, flowers correspond to one semantic category and leaves correspond to another semantic category. A contour of each pattern element is used to generate a mask layer. For each mask layer, a contour region is filled with a color or a pixel value according to a preset semantic category index encoding, for example, background is assigned a value of 0, flowers are assigned a value of 1, leaves are assigned a value of 2, and background textures are assigned a value of 3, and so on, so as to ensure clear semantic hierarchy without overlap. The filled masks are referred to as semantic masks, and all the semantic masks are combined and merged according to spatial positions to form a complete semantic segmentation map, namely the original semantic segmentation maps.

The original semantic segmentation maps are multi-class semantic maps, which provide higher information dimensionality and stronger supervision capability, so that the first-stage image generation model can learn more refined semantic boundaries and complex pattern structures. In an actual printing image generation process, different semantic regions may correspond to different color schemes, texture styles, or printing process parameters, and therefore the multi-class semantic maps provide a more sufficient structural basis for accurate pattern restoration and image style transfer. The semantic segmentation maps generated in this manner not only have clear boundaries and rich semantic labels, but also avoid semantic drift or category confusion caused by conventional image segmentation methods, thereby enabling the deep learning model to fully extract structural features during a training stage and improving stability and controllability of image generation.

In an optional embodiment, obtaining the original semantic segmentation maps according to the base images comprises:
extracting contours of pattern elements in the base images to obtain one or more mask layers;
performing pattern content filling and color filling on each of the mask layers to obtain unit design images;
merging all the unit design images in layers to obtain the design images; and
performing foreground-background segmentation on the design images to obtain the original semantic segmentation maps.

Specifically, contour information of respective pattern elements, such as flowers, leaves, and background textures, is first extracted from the base images, and each contour of a pattern element corresponds to generation of a mask of one layer. After these masks are obtained, pattern content filling and color filling may be performed on each mask, that is, visual style design is performed on the corresponding layer, thereby generating corresponding unit design images. Subsequently, all of the above unit design images are subjected to layer merging processing, that is, the unit design images are superposed according to spatial positions and hierarchical relationships thereof, thereby obtaining the complete design images.

The design images may be used as training samples of the subsequent second-stage image generation model, and may also be subjected to foreground and background segmentation so as to obtain semantic segmentation maps used in training of the first-stage image generation model. By way of example, the foreground and the background may be segmented by using a color threshold, pixel value comparison, or the like. For example, pattern regions are regarded as the foreground, and remaining regions are regarded as the background, thereby obtaining the original semantic segmentation maps for training the first-stage image generation model. Compared with a multi-class semantic segmentation map, a binary semantic segmentation map only needs to distinguish the foreground, namely a design pattern, from the background, and has a relatively coarse annotation granularity, such that manual cost and working time are significantly reduced. Since only two semantic classes, namely the foreground and the background, are involved, the model does not need to handle complex class boundaries or multi-label conflict problems during training, and can learn contour structures and boundary features more quickly, thereby helping improve convergence speed and generalization capability of the model and reducing a risk of overfitting.
performing elastic deformation processing with identical parameters on training input semantic segmentation maps for training the second-stage image generation model and the design images to obtain second training semantic segmentation maps and second training design images;
performing uniform sampling or random sampling on the second training semantic segmentation maps and the second training design images by using sampling windows with identical coordinate values to obtain third sub-training images and fourth sub-training images, wherein each third sub-training image and the corresponding fourth sub-training image form a second training image pair; and
using the fourth sub-training images as supervision labels, and inputting the second training image pairs into a second deep neural network model for training to obtain the second-stage image generation model.

Specifically, a training input semantic segmentation map used for training the second-stage image generation model is obtained, wherein the training input semantic segmentation map serves as a source of structural input information for guiding the model to generate the printing image. The training input semantic segmentation map may be obtained from different sources. One source is the original semantic segmentation map obtained in the foregoing embodiment after extracting pattern contours from the base images and generating masks therefrom, which is referred to as a first-type semantic segmentation map. Another source is a semantic segmentation map output after inputting the base images of the first-stage training samples into the first-stage image generation model, which is referred to as a second-type semantic segmentation map. In order to improve diversity and robustness of training, one of the above two types may be randomly selected as the training input semantic segmentation map used in a training process of the second-stage image generation model. In some scenarios, the second-type semantic segmentation map may also be directly used as a standard input so as to simulate a real input state in an inference stage, thereby enabling the model to better adapt to an actual operating environment.

Subsequently, a design image corresponding to the base image is obtained. The design image represents a to-be-printed image pattern to be reproduced on a substrate in practical application, and is typically created by a designer based on texture features or pattern features of the base image.

Similarly to the training process of the first-stage image generation model, in this training stage, in order to enhance spatial transformation adaptability and anti-interference capability of the model, the training input semantic segmentation map and the corresponding design image are subjected to elastic deformation processing with identical parameters, thereby generating a pair of deformed second training semantic segmentation map and second training design image.

The deformation processing includes affine transformation and non-linear elastic deformation. The affine transformation, such as rotation, scaling, and translation, introduces translation invariance and scale robustness while maintaining an overall contour of a pattern. The non-linear elastic deformation may simulate complex deformations such as local distortion and stretching caused by physical effects on a printing medium based on a coordinate grid perturbation mechanism, thereby improving the capability of the model to adapt to content variations under a condition that semantic structures remain consistent.

In addition, random noise perturbation may be introduced to cause slight variations in brightness, texture, and color distribution, so as to simulate error factors in an actual printing environment. The above deformation processing ensures that the second training semantic segmentation map and the second training design image generate rich geometric deformation patterns while maintaining consistent pattern semantics, thereby forming sample diversity required for model training.

After completing the deformation processing, unified sampling is performed on the second training semantic segmentation map and the second training design image using sampling windows with identical coordinate values. The sampling may be performed in a uniform manner, in which image patches are extracted across the entire image at fixed intervals to ensure comprehensive coverage of training samples, or in a random manner, in which sampling regions are randomly selected within the image to improve diversity and sparsity of the training samples. For each sampling window, corresponding patches are respectively extracted from the second training semantic segmentation map and the second training design image to form a third sub-training image, i.e., a sampled semantic segmentation patch, and a fourth sub-training image, i.e., a sampled design image patch. The two are in one-to-one correspondence based on coordinates and together form a second training image pair, serving as input data and supervision labels for the second deep neural network model. The third sub-training image is used as model input to provide structural guidance, while the fourth sub-training image is used as a supervision label to provide an expected stylized printing pattern. The second training image pairs are then input into the second deep neural network model for training, during which the model learns a mapping from semantic structure to image style by minimizing losses including pixel loss, style loss, and structural consistency loss between generated images and supervision labels. Through the input of a large number of diversified, structurally aligned, and stylistically well-defined training image pairs, the second-stage model progressively learns to synthesize printing patterns that conform to design expectations under semantic constraints, thereby achieving semantic-guided image style transfer and detail reconstruction. Ultimately, after training is completed, the obtained second-stage image generation model is capable of rapidly synthesizing high-quality to-be-printed images from arbitrary target semantic segmentation maps.

In an optional embodiment, the image generation model comprises a first image generation model and a second image generation model, and training the deep learning network model based on the base images and the design images to obtain the image generation model comprises:
obtaining, according to the base images, a first shape mask set, wherein the first shape mask set comprises a plurality of different first shape masks representing homomorphic heterochromatic pattern elements in the base images, and the homomorphic heterochromatic pattern elements are determined according to the design images;
using the base images as input and the first shape mask set as labels to train a first deep learning model, thereby obtaining the first image generation model;
splitting each of the first shape masks into a plurality of color-shape sub-masks according to color information of corresponding homomorphic heterochromatic pattern elements in the design images, and combining the color-shape sub-masks from different first shape masks to obtain a training color mask set comprising a plurality of training color masks;
using the training color mask set as input and the design images as labels to train a second deep learning model, thereby obtaining the second image generation model.

Specifically, the first shape mask set is obtained according to the base images, wherein the first shape mask set comprises a plurality of different first shape masks, and different first shape masks are configured to represent different homomorphic heterochromatic pattern elements in the base images. The homomorphic heterochromatic pattern elements are determined according to the design images, and the design images are designed based on texture patterns of the substrates. During generation of the design images, the texture patterns in the base images, which may be directly obtained from acquired electronic images, may be utilized for design. In addition, when texture patterns on surfaces of the substrates exhibit regular repetitive distribution, the base images include at least one complete repeating texture pattern unit, and the design images correspondingly include image content of at least one complete repeating texture pattern unit. By performing comparative analysis between the design images and the base images, homomorphic heterochromatic pattern elements in the base images may be determined.

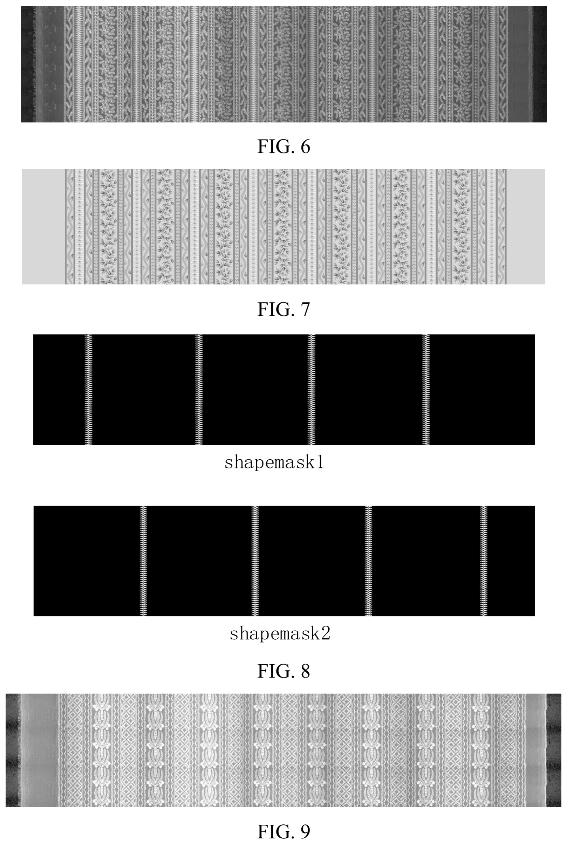

In an optional embodiment, each first shape mask is a contour mask of the homomorphic heterochromatic pattern element. The contour mask is used to mark an outer contour or a boundary region of the homomorphic heterochromatic pattern element. Contours of each type of homomorphic heterochromatic pattern element are extracted and respectively arranged into different channel layers to obtain a plurality of different first shape masks. As shown in FIG. 6, FIG. 6 illustrates one example of the base images, FIG. 7 illustrates corresponding design images, and FIG. 8 illustrates respective first shape masks in the first shape mask set.

In this embodiment, obtaining, according to the base images, the first shape mask set comprises:
classifying homomorphic heterochromatic pattern elements in the design images or the base images and extracting contours thereof to obtain a plurality of the first shape masks, wherein each first shape mask corresponds to one type of homomorphic heterochromatic pattern element.

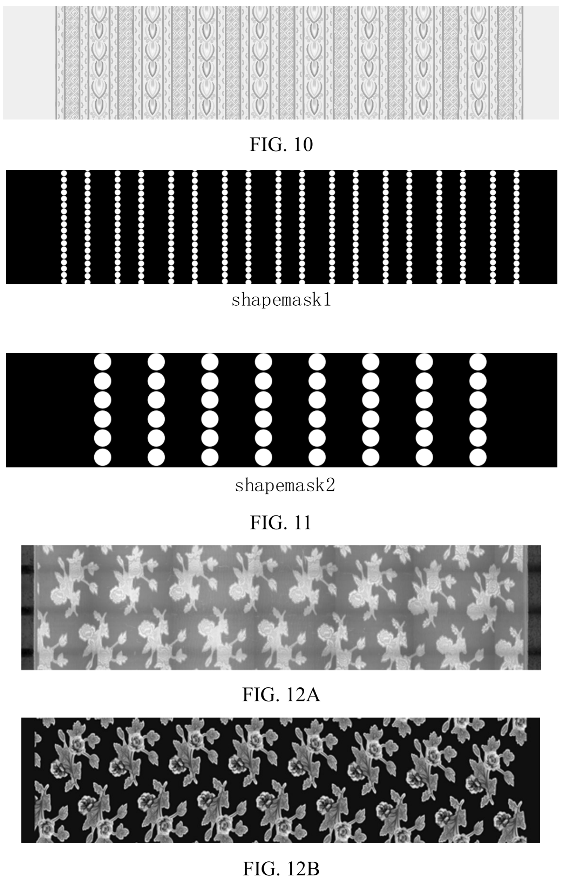

In another optional embodiment, the first shape mask is a contour mask corresponding to a preset shape for marking the homomorphic heterochromatic pattern element. The contour mask is used to mark an outer contour or a boundary region of the preset shape corresponding to the homomorphic heterochromatic pattern element. The homomorphic heterochromatic pattern element is represented by the preset shape, and a contour of the preset shape is extracted to form a mask in one channel layer, thereby obtaining the corresponding first shape mask. The preset shape anchors semantics or features of the corresponding homomorphic heterochromatic pattern element, and a center point of the preset shape is identical to or close to a center point of the corresponding homomorphic heterochromatic pattern element. As shown in FIG. 9, FIG. 9 illustrates one example of the base images, FIG. 10 illustrates corresponding design images, and FIG. 11 illustrates respective first shape masks in the first shape mask set.

In this embodiment, obtaining, according to the base images, the first shape mask set comprises:
marking homomorphic heterochromatic pattern elements in the design images and the base images;
extracting contours of preset shapes having corresponding sizes according to sizes of the marked homomorphic heterochromatic pattern elements to obtain a plurality of the first shape masks, wherein each first shape mask corresponds to one type of homomorphic heterochromatic pattern element, and the preset shape is circular, elliptical, or rounded rectangular.

Specifically, the first shape mask is essentially a structured image channel that abstracts contour structures of the homomorphic heterochromatic pattern elements, and is configured to retain only geometric shapes of the pattern elements without including specific color information, such that the model can first learn stable shape semantic features. The homomorphic heterochromatic pattern elements refer to pattern units having identical geometric structures but different colors in the design images, such as pattern blocks of a same motif with different color schemes.

To construct the first shape mask set, pattern elements in the base images may first be classified according to pattern structures determined in the design images, and contour extraction processing is then performed on each category of pattern elements to convert boundary regions of corresponding patterns into single-channel contour masks, such that each first shape mask corresponds to one type of homomorphic heterochromatic pattern element. Alternatively, homomorphic heterochromatic pattern elements may be manually or semi-automatically marked in the design images or the base images, and contour templates of preset shapes, such as circular, elliptical, or rounded rectangular shapes, are generated according to sizes of marked regions. The templates are then scaled to match pattern sizes to obtain a plurality of first shape masks having sizes consistent with the pattern elements.

Since the preset shapes semantically correspond to particular pattern structures, spatial structural features of the pattern elements can be anchored, enabling the model to stably identify pattern regions having identical structural features during subsequent training, without being affected by color variations or background textures. By constructing the first shape mask set in this manner, pattern structural information in complex textured backgrounds can be expressed in a clear contour form, such that the subsequent deep learning network model can first learn shape distribution patterns and then further process color differences, thereby effectively improving stability and accuracy of recognition and generation of homomorphic heterochromatic pattern elements.

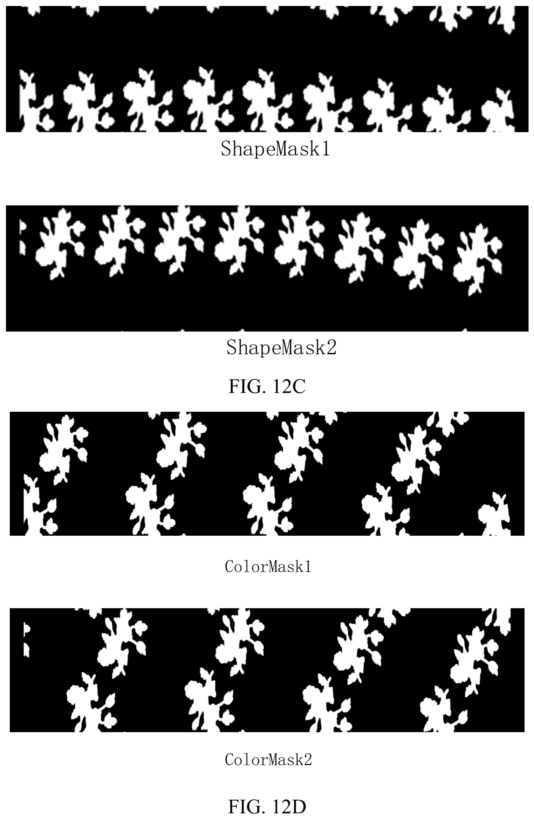

In another embodiment, as shown in FIG. 12a and FIG. 12b, FIG. 12a illustrates base images and FIG. 12b illustrates corresponding design images. When pattern elements in the design images are all homomorphic heterochromatic pattern elements or most of the pattern elements are homomorphic heterochromatic pattern elements, the first shape mask set only comprises masks corresponding to the homomorphic heterochromatic pattern elements. As shown in FIG. 12c, FIG. 12c illustrates respective first shape masks in the first shape mask set corresponding to FIG. 12a, and the first shape mask set at this time only comprises masks corresponding to the homomorphic heterochromatic pattern elements.

In one embodiment, the first shape mask set may further comprise a first full shape mask or a first base shape mask, which are used to assist shape feature extraction and training optimization. The first full shape mask is a mask obtained by performing contour extraction on all pattern elements in the base images, whereas the first base shape mask corresponds to a mask obtained by extracting contours of homomorphic monochromatic pattern elements in the base images. Specifically, with reference to homomorphic monochromatic pattern element information in the design images, regions of homomorphic monochromatic pattern elements in the acquired image are located, contours of such pattern elements are extracted, and the extracted contours are uniformly arranged into a same channel layer to obtain the first base shape mask.

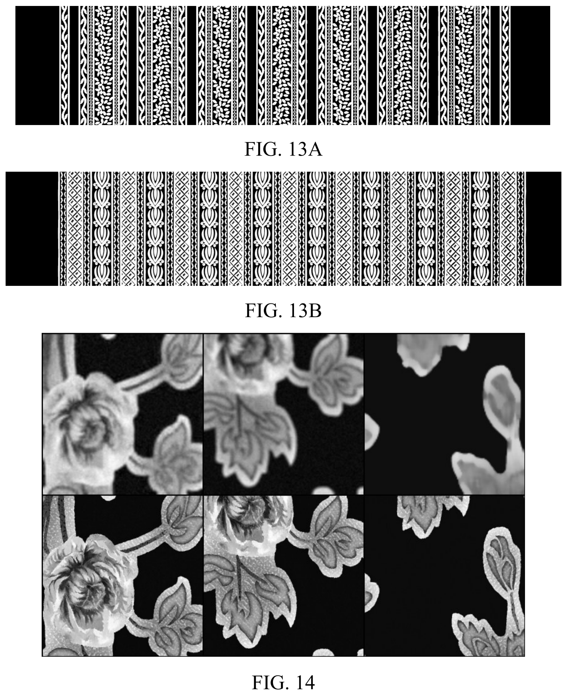

On the other hand, a construction process of the first full shape mask is as follows: without distinguishing between shape categories or color categories of patterns, contours of all pattern elements in the image are extracted in an integrated manner, and outer contours of all patterns are uniformly extracted and placed into a same channel layer to obtain the first full shape mask. The first full shape mask provides a complete pattern structural framework, enabling the deep learning network model to acquire a macroscopic understanding of overall texture partitioning, continuity of shape boundaries, and pattern layout during the training stage. In addition, in some model architectures, the first full shape mask may also be used to assist model convergence, enhance stability of feature extraction, and reduce sensitivity of the model to local disturbances or acquisition noise. By way of example, FIG. 13a illustrates the first full shape mask corresponding to the base images in FIG. 6, and FIG. 13b illustrates the first base shape mask corresponding to the base images in FIG. 9.

Next, the base images are used as input and the first shape mask set is used as labels to train the first deep learning model, thereby obtaining the first image generation model. In addition to training the first image generation model, the second image generation model for generating the final printing image also needs to be trained. Before training the second image generation model, each first shape mask is split into a plurality of color-shape sub-masks according to a number of color variants of corresponding homomorphic heterochromatic pattern elements in the design images, wherein one color scheme or one color matching scheme of a homomorphic heterochromatic pattern element is referred to as one color variant.

Specifically, for each first shape mask, a number of color variants of corresponding pattern elements in the design images is first counted, and the first shape mask is split into an equal number of color-shape sub-masks. Subsequently, color-shape sub-masks from different first shape masks are combined according to color-shape channels to form a plurality of training color masks. Through the splitting and combining operations, it can be ensured that no homomorphic heterochromatic condition exists in each training color mask, such that training inputs have accurate color-layered information, thereby supporting color accuracy of subsequent printing image generation. Finally, the plurality of training color masks are used as input and the design images are used as labels to train the second deep learning model, thereby obtaining the second image generation model.

In an optional embodiment, splitting each of the first shape masks into a plurality of color-shape sub-masks according to color information of corresponding homomorphic heterochromatic pattern elements in the design images, and combining the color-shape sub-masks from different first shape masks to obtain a training color mask set comprising a plurality of training color masks, comprises:
denoting the first shape masks as ShapeMask1, ShapeMask2, ..., ShapeMaskN, wherein N is a number of the first shape masks;
obtaining a number i of color variants corresponding to pattern elements of ShapeMask1 in the design images, splitting ShapeMask1 into i first color-shape sub-masks, and forming i color-shape channels based on the i first color-shape sub-masks;
obtaining a number j of color variants corresponding to pattern elements of ShapeMask2 in the design images, and splitting ShapeMask2 into j second color-shape sub-masks; if j is less than or equal to a current number of established color-shape channels, placing the j second color-shape sub-masks into the existing color-shape channels in a one-to-one correspondence; if j is greater than the current number of color-shape channels, placing a number of second color-shape sub-masks equal to the current number of color-shape channels into the existing color-shape channels in a one-to-one correspondence, generating a number of new color-shape channels equal to j minus the current number of color-shape channels, and placing remaining second color-shape sub-masks into the newly generated color-shape channels, thereby obtaining j color-shape channels;
repeating above process for each of the first shape masks, splitting each first shape mask according to a number of color variants of corresponding pattern elements in the design images and placing resulting color-shape sub-masks into respective color-shape channels, thereby obtaining k color-shape channels, wherein k is a maximum number of color variants corresponding to pattern elements among the first shape masks; and
combining all color-shape sub-masks in each color-shape channel to obtain corresponding training color masks, thereby obtaining the training color mask set comprising k training color masks.

Specifically, after obtaining the first shape masks, in order to ensure that different homomorphic heterochromatic pattern elements can be accurately mapped to corresponding color information in the design images during subsequent color mapping and printing image generation, the first shape masks are further refined along a color dimension and are uniformly combined at a channel level to construct a plurality of training color masks each containing only homomorphic monochromatic pattern elements.

For convenience of description, the plurality of first shape masks are denoted as ShapeMask1, ShapeMask2, ..., ShapeMaskN, wherein N represents a number of the first shape masks. For ShapeMask1, a number i of color variants corresponding to its homomorphic heterochromatic pattern elements in the design images is obtained, and ShapeMask1 is split into i first color-shape sub-masks according to color differences, wherein each sub-mask retains only pattern elements corresponding to one color. Based on the i sub-masks, i color-shape channels are established, such that each color-shape channel corresponds to one color type in the design images.

Subsequently, ShapeMask2 is processed in a same manner. A number j of color variants corresponding to pattern elements in ShapeMask2 is determined, and ShapeMask2 is split into j second color-shape sub-masks. When j is less than or equal to a current number of established color-shape channels, the j second color-shape sub-masks are respectively placed into corresponding existing color-shape channels according to color categories. When j is greater than the current number of color-shape channels, a number of second color-shape sub-masks equal to the current number of color-shape channels are first placed into existing channels, and new color-shape channels are generated according to a difference between j and the current number of channels, and remaining second color-shape sub-masks are sequentially placed into the newly generated channels, such that a total number of color-shape channels is expanded to j.

The same processing logic is applied sequentially to ShapeMask3 to ShapeMaskN. Each first shape mask is split according to a number of color variants of corresponding pattern elements and mapped to corresponding color-shape channels. When a number of color variants exceeds a current number of channels, additional channels are created as needed until all color variants are independently represented. After the above processing, k color-shape channels are obtained, wherein k is a maximum number of color variants among all the first shape masks.

Subsequently, color-shape sub-masks from different first shape masks within each color-shape channel are combined, such that all homomorphic heterochromatic pattern elements belonging to a same color category are aggregated into a complete training color mask. In this way, a plurality of training color masks that can be directly used as color-shape inputs are formed, thereby obtaining the training color mask set, wherein N, i, j, and k are natural numbers.

By way of example, as shown in FIG. 12d, two training color masks are obtained by performing the above splitting and combining operations on two first shape masks shown in FIG. 12c. Through the above processing manner of splitting and combining each first shape mask based on the design images, structured decomposition and mapping of homomorphic heterochromatic pattern elements along a color dimension are achieved, thereby providing color-semantic inputs with stable structure and strong consistency for subsequent deep learning training based on the plurality of training color masks and for printing image generation. In this embodiment, the above splitting and combining rule is referred to as a color encoding rule. In subsequent actual printing image generation, it is necessary to perform splitting and combining on multi-channel shape masks output from the first image generation model according to the same color encoding rule, so as to obtain multi-channel training color masks that can be input into the second image generation model.

In an optional embodiment, the image generation model further comprises a third image generation model, and training the deep learning network model based on the base images and the design images to obtain the image generation model further comprises:
performing a resolution degradation process on the design images to obtain first design images;
performing a resolution enhancement process on the first design images to obtain second design images;
using the first design images and the base images as input, and using the second design images as labels to train a third deep learning model, thereby obtaining the third image generation model.

Specifically, since both the first image generation model and the second image generation model require a sufficiently large contextual field of view, insufficient context may cause similar inputs to produce significantly different outputs, thereby leading to training failure. Therefore, under constraints of limited computational power and memory, input image sizes of the image generation model are restricted. For fabrics having large pattern sizes, it is necessary to perform downsampling on training samples so as to enlarge the contextual field of view.

Correspondingly, output results of the second image generation model need to be upsampled to a target resolution (DPI, dots per inch). However, clarity of images after upsampling is lower than that of the design images. To address this issue, a super-resolution model is introduced to enhance image clarity. The super-resolution model takes a low-resolution image as input and outputs an image having higher clarity than the input, although not necessarily reaching a clarity level of the design images.

Therefore, prior to actual production, the super-resolution model, namely the third image generation model, is trained to improve clarity of printing images used as input to the second image generation model during actual production, thereby ensuring overall printing quality.

Specifically, the design images are first subjected to a resolution degradation process to generate first design images. The resolution degradation process may be implemented by Gaussian blurring, bilateral denoising, or low-resolution resampling. Subsequently, a resolution enhancement process is performed on the first design images to obtain second design images. The resolution enhancement process may employ conventional interpolation-based enhancement algorithms, such that the restored second design images achieve visual quality equal to or higher than that of the design images in terms of contour sharpness, texture continuity, and local details.

After obtaining the first design images and the second design images, the first design images are used as input and the second design images are used as supervision labels to train the third deep learning model. Through such paired training of "low-resolution-high-resolution", the third deep learning model learns a mapping mechanism for restoring and reconstructing high-quality pattern details from lower-quality inputs, thereby enabling automatic enhancement of blurred, low-resolution, or noisy images. Since the first design images are derived from degraded versions of the design images, internal structures, pattern layouts, and color partitions thereof remain consistent with those of the design images, allowing the model to focus on learning texture reconstruction, edge enhancement, and local detail compensation while preserving overall pattern semantics.

The third image generation model obtained through the above training may be used in subsequent applications to enhance output results of the second image generation model, thereby ensuring that final printing images have sharper edges, finer textures, and improved visual quality, thus significantly improving product quality. As shown in FIG. 14, a first row of images corresponds to a first printing image output by the second image generation model, and after being input into the third image generation model, a second row of images corresponds to a second printing image having higher clarity.

In addition, in other embodiments, the base images may also be used as input when training the third deep learning model. By further inputting the base images into the third deep learning model, the model can learn alignment information contained in the base images, thereby generating target images that are spatially more consistent with actual printing effects.

In one embodiment, as described above, the first image generation model, the second image generation model, and the third image generation model are trained in a parallel manner, such that the three models are trained independently, thereby improving training efficiency and reducing an overall training cycle.

In another embodiment, training processes of the three image generation models are performed in a serial manner, wherein an output of the first image generation model is used as input for training the second image generation model, and an output of the second image generation model is used as input for training the third image generation model. The serial training manner strengthens semantic dependencies among the models, enabling natural alignment of data distributions across different stages, improving stability of the overall processing pipeline during inference, and facilitating convergence efficiency and generation performance. A specific training manner may be selected according to actual application requirements.

In an optional embodiment, the method further comprises:
acquiring an image of a substrate surface including a defect region to obtain an original image;
annotating a corresponding defect portion in the original image to form a defect image dataset;
training an image inpainting model by using a deep learning algorithm based on the defect image dataset, and generating an inpainted image according to the trained image inpainting model;
inputting the inpainted image and the original image into a raster processing module to perform edge transition processing so as to generate inpainting print data;
performing inkjet compensation printing on the defect region of the substrate surface according to the inpainting print data.

Specifically, an image acquisition device such as an industrial camera or an AI camera is controlled to acquire an image of a defect region on a substrate surface, thereby obtaining the original image. The defect region refers to an abnormal region where patterns are incomplete, damaged, or lack color. The original image may cover the entire substrate surface or a local region including the defect. The corresponding defect portion is annotated by manual or automatic methods to form a defect image dataset for subsequent model training.

Next, an image inpainting model is trained based on the defect image dataset using a deep learning algorithm, such as a generative adversarial network, an autoencoder, or a Transformer-based model. Through sample learning, the model captures edge, texture, and color distribution features, so that when new defect images are input, inpainted images that are naturally fused with the original image can be generated.

To improve fusion quality, the inpainted image and the original image are input into a raster processing module, which extracts edge color information and constructs an edge transition curve to perform color transition processing, thereby achieving a smooth and natural transition from the inpainted image to the original image and generating inpainting print data.

Finally, an inkjet printhead performs compensation printing on the defect region according to the inpainting print data. Through image acquisition, deep learning-based inpainting, and edge transition processing, smooth and natural printing results are achieved without relying on design drafts or manual reconstruction, thereby improving repair quality and efficiency and enabling application in high-quality printing scenarios such as boards, leather, and wood grain materials.

In an optional embodiment, the deep learning algorithm comprises a generative adversarial network, an autoencoder, or a Transformer architecture. The generative adversarial network learns image structures and texture features through adversarial training between a generator and a discriminator, thereby generating inpainted images with high realism and coherence. The autoencoder extracts low-dimensional features through an encoder and reconstructs images through a decoder, and completes defect regions by minimizing pixel differences, featuring a simple structure and high computational efficiency. The Transformer performs global modeling on image patches based on a self-attention mechanism, enabling capture of long-range dependencies and generation of inpainted content consistent with surrounding context. By training and inference on defect images using the above models, inpainted images having complete structures and consistent styles can be generated, which are suitable for image inpainting scenarios with different levels of complexity and distribution characteristics.

In an optional embodiment, inputting the inpainted image and the original image into the raster processing module to perform edge transition processing so as to generate the inpainting print data comprises:
obtaining a color concentration of a first edge image region in the original image that is adjacent to the defect image, the first edge image region having a width of a preset number of pixels, and denoting the color concentration as a first color concentration;
obtaining a color concentration of a second edge image region in the inpainted image that is stitched with the first edge image region, the second edge image region having a width of a preset number of pixels, and denoting the color concentration as a second color concentration;
constructing a concentration transition curve according to the first color concentration and the second color concentration;
performing color transition processing on the second edge image region of the inpainted image based on the concentration transition curve to obtain a transition-processed inpainted image;
performing rasterization on the transition-processed inpainted image to generate the inpainting print data.

Specifically, a first edge image region adjacent to the defect image is first obtained from the original image. The first edge image region is an image band immediately adjacent to a defect boundary and having a width of a preset number of pixels (for example, 10 pixels). Color concentration information of the first edge image region reflects color variation at the boundary of the defect region on the substrate, and is denoted as a first color concentration. Similarly, a second edge image region in the inpainted image that is stitched with the first edge image region is obtained. The second edge image region is a part of the inpainted image, has a same preset pixel width as the first edge image region, and is positioned to be stitched with the boundary of the defect region on the substrate corresponding to the first edge image region in the original image. Color concentration information of the second edge image region is obtained and denoted as a second color concentration, which is used to analyze color differences between an edge of the inpainted image and the boundary of the defect region.

Subsequently, a concentration transition curve is constructed based on a difference between the first color concentration and the second color concentration. The concentration transition curve describes a smooth variation trend of color concentration from the inpainted image to the original image. The transition curve may be constructed by an interpolation algorithm, function fitting, or a perceptual-model-based color adjustment algorithm, so as to ensure continuous and natural color variation and to avoid abrupt changes in brightness or saturation. After the transition curve is constructed, color transition processing is performed on the second edge image region based on the concentration transition curve. Specifically, pixel color values in the second edge image region are adjusted according to a concentration gradient defined by the transition curve, such that color concentration is gradually transitioned from the inpainted image edge to a main region of the original image, thereby achieving visually smooth color blending and enhancing realism and naturalness of the transition.

After the color concentration transition processing, a transition-processed inpainted image having a good fusion effect is obtained. Finally, rasterization is performed on the transition-processed inpainted image, that is, the image is converted by the raster processing module into a printing data format recognizable by a printer (such as PRN), thereby generating final inpainting print data for compensation printing. The inpainting print data retains pattern content of the inpainted image while achieving color coordination and smooth transition with the substrate surface image at the edges, effectively avoiding stitching artifacts or abrupt color changes, and presenting a unified, smooth, and natural visual effect in a final printed output.

In an optional embodiment, the image generation model comprises a single-stage image generation model and a multi-stage image generation model, and inputting the real-time image of the substrate into the image generation model to obtain the printing image comprises:
performing edge detection and contour extraction on the real-time image to obtain a real-time pattern contour;
determining whether mutual nesting exists among the real-time pattern contour;
in response to determining that mutual nesting exists, determining that texture features of the real-time image are correlated with pattern features of the design images;
in response to determining that mutual nesting does not exist, determining that the texture features of the real-time image are not correlated with the pattern features of the design images;
in response to determining that the texture features are correlated, inputting the real-time image into the single-stage image generation model to obtain the printing image;
in response to determining that the texture features are not correlated, inputting the real-time image into the multi-stage image generation model to obtain the printing image, wherein the multi-stage image generation model comprises at least a first-stage image generation model for generating a target semantic segmentation map and a second-stage image generation model for generating the printing image.

Specifically, the real-time image and the design images are analyzed to determine whether texture-feature correlation exists therebetween. Here, the design images refer to preset pattern images for inkjet printing, which are typically created in graphic editing software according to product requirements and include color, contour, and layer information. The design images serve as supervision labels in the image generation model and are used to train and supervise the image generation model to generate the printing image matching texture patterns of the substrate.

When a determination result indicates that correlation exists, that is, when patterns of the design images are consistent with or complementary to contours, textures, or nested structures of a target base image, the real-time image is input into the single-stage image generation model to directly generate the printing image adapted to texture features of the substrate. When a determination result indicates that no correlation exists, for example, when the design images retain only outer contours of patterns in the real-time image while removing contour details such as internal mutual nesting of the patterns, the multi-stage image generation model is adopted. The multi-stage image generation model comprises at least the first-stage image generation model for generating the target semantic segmentation map and the second-stage image generation model for generating the printing image. That is, semantic segmentation is first performed on the target base image to identify contour features and the like, and then the printing image is generated based on the semantic segmentation map.

In an optional embodiment, the single-stage image generation model is a conditional generative adversarial network (cGAN), and core components thereof comprise a generator having a U-Net architecture and a PatchGAN discriminator. Through iterative training of the deep neural network model, the model learns texture features, structural features, and deformation characteristics of a substrate to be printed, thereby generating a corresponding printing image.

In an optional embodiment, in the multi-stage image generation model, the first-stage image generation model analyzes a target base image based on a deep neural network model such as U-Net or Mask R-CNN, extracts key semantic features such as contours and texture distributions, and outputs a target semantic segmentation map corresponding to the target base image. The semantic segmentation map simplifies and abstracts image information, thereby reducing sensitivity of the generation process to image detail differences. Subsequently, the target semantic segmentation map is input into the second-stage image generation model. The second-stage image generation model, based on a generative model having high-quality image synthesis capability such as Pix2PixHD or SPADE, generates a printing image that is consistent in style with the target base image and structurally matched thereto.

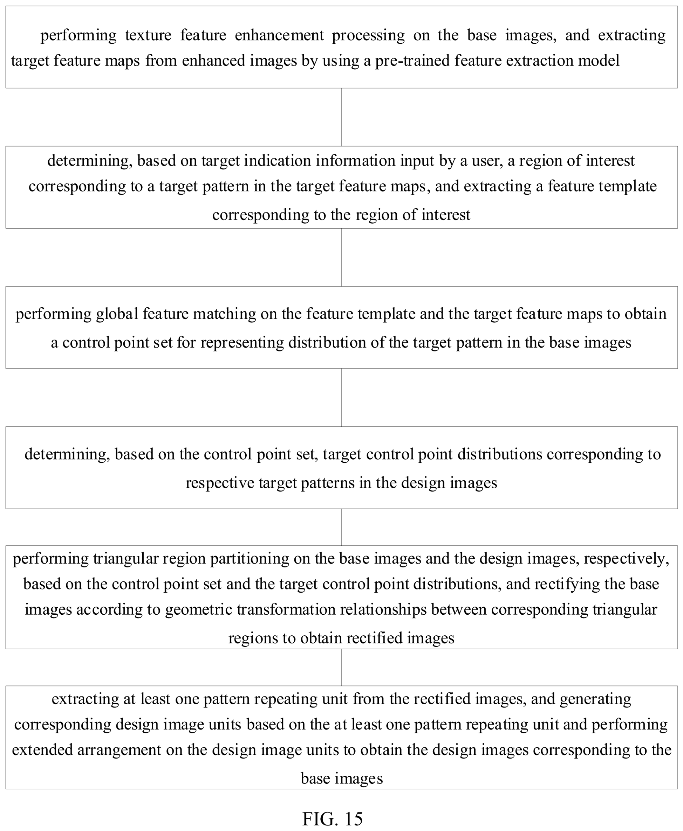

In an optional embodiment, as shown in FIG. 15, acquiring the base images and the design images corresponding to the substrate to be printed comprises:
performing texture feature enhancement processing on the base images and extracting target feature maps from enhanced images by using a pre-trained feature pre-extraction model;
determining, based on target indication information input by a user, a region of interest corresponding to a target pattern in the target feature maps, and extracting a feature template corresponding to the region of interest;
performing global feature matching on the feature template and the target feature maps to obtain a control point set for representing distribution of the target pattern in the base images;
determining, based on the control point set, target control point distributions corresponding to respective target patterns in the design images;
performing triangular region partitioning on the base images and the design images, respectively, based on the control point set and the target control point distributions, and rectifying the base images according to geometric transformation relationships between corresponding triangular regions to obtain rectified images; and
extracting at least one pattern repeating unit from the rectified images, and generating corresponding design image units based on the at least one pattern repeating unit and performing extended arrangement on the design image units to obtain the design images corresponding to the base images.

Specifically, the acquired base image is first subjected to texture feature enhancement processing. By optimizing local contrast, brightness, and fine details, the influence of uneven illumination, wrinkles, and background texture interference is suppressed, thereby improving clarity of pattern contours and structural information. The enhanced image is then input into a pre-trained feature pre-extraction model for encoding to obtain a target feature map containing stable texture structures and spatial semantic information. Subsequently, based on user-input click positions or annotation points, a region of interest that covers key texture features of the target pattern is determined in the target feature map, and a feature template corresponding to the region of interest is extracted as a structured representation of the target pattern in the feature space.

On this basis, global similarity matching is performed between the feature template and the target feature map to obtain multiple candidate matching positions. The candidate results are filtered according to response strength and spatial distribution relationships, and key positions that accurately reflect distribution of the target pattern are retained to form a set of control points. The target patterns are then classified and corresponded based on the control point set, and are regularized according to row-column relationships and spacing constraints. Accordingly, a distribution of target control points is constructed in the design image to form a standardized layout reference. Thereafter, topologically consistent triangular region networks are constructed respectively based on the control point set and the target control point distribution, and triangular region partitioning is performed on the base image and the design image. Geometric transformation relationships are calculated for corresponding triangular regions, and the base image is mapped and rectified region by region, thereby eliminating local stretching and global distortion to obtain a structurally regular rectified image.

Finally, at least one pattern repeating unit that characterizes repetition rules of the pattern is extracted from the rectified image. After necessary boundary and structural refinement, a design unit is generated, and is further extended and tiled according to preset arrangement and stitching rules so that adjacent units maintain continuous transitions, thereby obtaining a design image corresponding to the base image and suitable for subsequent printing output.

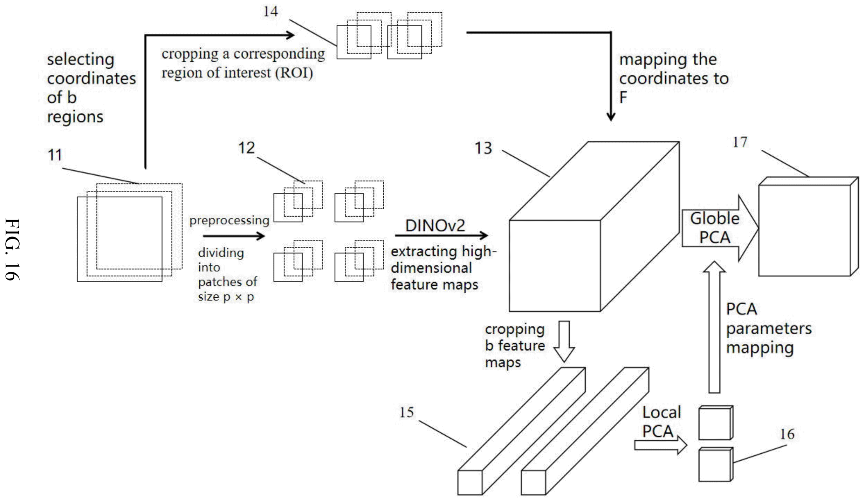

Specifically, as shown in FIG. 16, the figure illustrates an overall processing flow for progressively constructing a low-dimensional target feature map from an original scanned image. The processing stages are connected through feature extraction and dimensionality reduction operations, so that feature dimensionality is reduced while preserving structural information of patterns, thereby improving efficiency of subsequent image matching and processing.

First, an original scanned image of the substrate is acquired as a base image. As shown by scanned image 11, the image is complete color image data with a size of H×W×3, where H and W represent height and width of the image, and 3 represents RGB color channels. Since the scanned image is typically large in size, preprocessing and image patching are performed to improve computational efficiency. The scanned image is divided into a plurality of local image patches with a fixed size of p×p, thereby forming an image patch set, as shown by image patches 12. In this way, the overall spatial structure relationship is preserved while reducing data scale for each feature extraction.

Subsequently, the image patches are input into a pre-trained feature pre-extraction model for feature extraction. As shown in the figure, a deep feature extraction model processes the image patch set to obtain high-dimensional feature representations, thereby forming a high-dimensional feature map 13. The high-dimensional feature map generally has a dimension of H×W×C, where C represents the number of feature channels. Compared with the original image, each spatial position in the high-dimensional feature map contains not only color information but also texture structures, shape information, and local contextual features extracted by the deep model, thereby enabling more stable representation of pattern structures.

After obtaining the high-dimensional feature map, the system determines reference regions for feature analysis. The user selects positions of multiple regions of interest in the original scanned image, and corresponding ROI regions are cropped from the scanned image based on these positions, as shown by ROI regions 14. The spatial coordinates of these ROI regions are then mapped to the high-dimensional feature map, so that corresponding positions are determined in the feature space.

Based on the mapped coordinate positions, a plurality of corresponding local feature regions are cropped from the high-dimensional feature map to form a local feature set, as shown by local feature set 15. The set includes multiple local feature blocks with a size of b×h×w×C, where b represents the number of selected target regions, and h and w represent sizes of local windows. In this manner, local features of multiple target regions can be extracted separately for subsequent feature analysis and dimensionality reduction processing.

Next, principal component analysis is performed on the local feature set. By performing PCA on the local feature set, major directions of feature variation are extracted and feature dimensionality is compressed, thereby obtaining dimension-reduced local feature representations, as shown by reduced local features 16. This process not only reduces the number of feature channels but also preserves main information representing structural characteristics of the target pattern, and records corresponding PCA transformation parameters.

Finally, the PCA transformation parameters obtained from the local feature set are mapped to the entire high-dimensional feature map, and a unified dimensionality reduction transformation is applied to the high-dimensional feature map, thereby obtaining an overall reduced low-dimensional feature map, as shown by low-dimensional feature map 17. The low-dimensional feature map maintains spatial structural relationships consistent with the original image, while significantly reducing feature dimensionality, so that subsequent computations such as pattern matching, control point extraction, and geometric correction can be performed more efficiently.

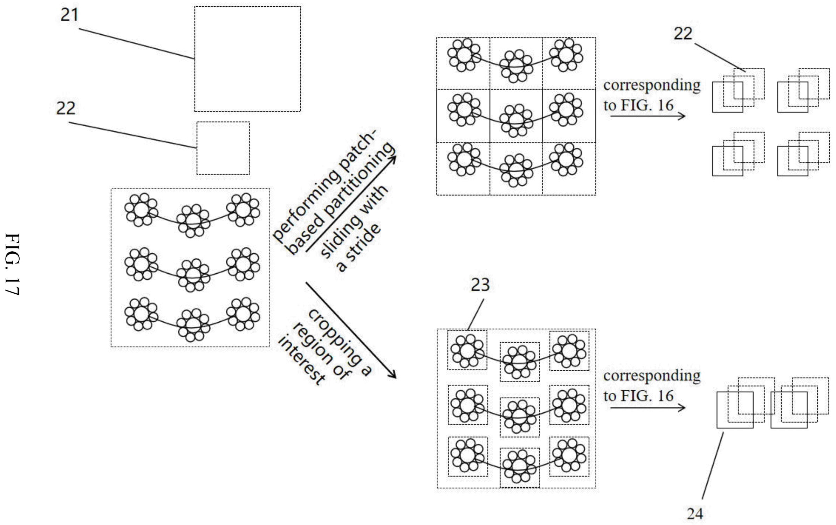

Specifically, as shown in FIG. 17, the figure illustrates two approaches for constructing feature extraction regions in a scanned image, so as to provide input regions for subsequent feature matching and dimensionality reduction processing. First, an original scanned image 21 of the substrate is acquired, where the scanned image includes a plurality of repeatedly arranged pattern units. A feature extraction window 22 is then defined on the scanned image, and the feature extraction window may serve as a basic unit for image patching.

In one implementation, the system performs regular partitioning on the scanned image 21 according to a size of the feature extraction window 22, that is, patching is performed based on a preset patch size, and the window is moved across the scanned image with a predefined stride, thereby generating a plurality of regularly arranged image patch regions. These regions can subsequently correspond to the local feature regions in FIG. 16 and are used for subsequent feature extraction and dimensionality reduction processing.

In another implementation, the system directly crops regions of interest containing target patterns from the scanned image 21 according to pattern structures, thereby forming a plurality of target region sets 23. These ROI regions are cropped around respective pattern units so that each region contains a complete target pattern structure. The ROI regions are then mapped into a corresponding feature space to obtain a feature block set 24 corresponding to the local feature regions in FIG. 16. Through the above two region construction approaches, a selection can be made between regular grid-based patching and target pattern-based ROI cropping, thereby providing suitable input regions for subsequent image feature analysis.

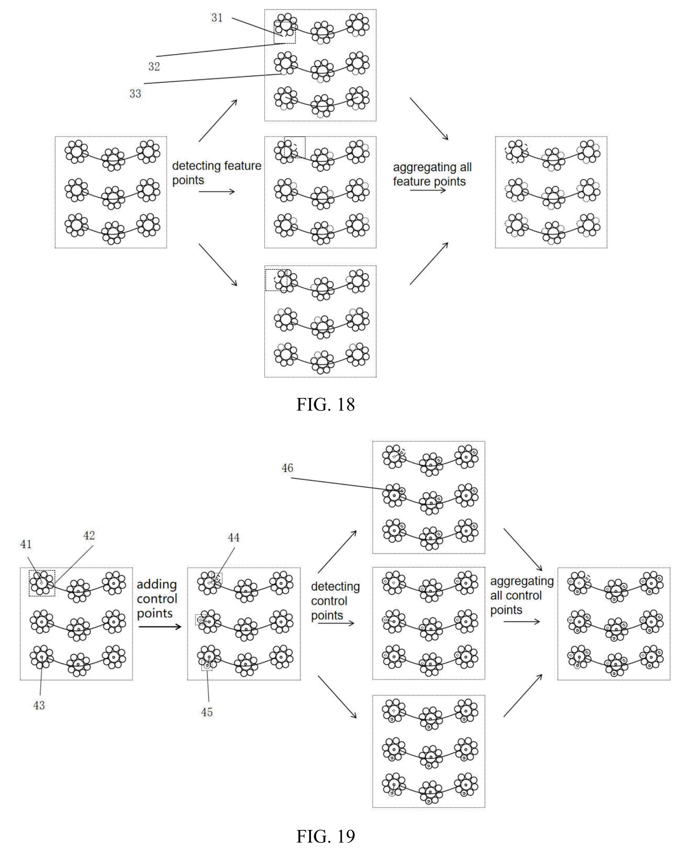

Specifically, as shown in FIG. 18, the figure illustrates a process of searching and aggregating pattern feature points region by region across an entire image in an anchor-free guidance mode. First, all pattern units in the input image are traversed, and feature point detection is performed within different local regions to determine key positions of the patterns. In each local region, representative feature points in the pattern structure are identified. A feature point located at a central position of a pattern is marked as feature point 31, which represents a core characteristic position of the pattern unit; a corresponding local image block region surrounding the feature point is defined as region 32; and key structural positions detected and marked within the region constitute a feature point set 33.

The same feature point detection process is repeatedly performed in multiple local regions at different positions, thereby obtaining a plurality of local feature point sets. Subsequently, feature points detected in all local regions are aggregated in a unified manner to form a complete image feature point set. Through this approach, key feature points corresponding to pattern structures can be stably extracted across the entire image, thereby providing reliable spatial references for subsequent pattern matching, geometric correction, and print image generation.

In an optional embodiment, the control point set comprises a plurality of initial feature points, after performing global feature matching on the feature template and the target feature maps to obtain the control point set representing distribution of the target pattern in the base images, the method further includes:
Specifically, the control point set comprises a plurality of initial feature points, which are used to preliminarily identify candidate positions having relatively high similarity with a preset target in a feature space corresponding to the entire base image, thereby providing a basis for subsequent anchor-guided fine extraction, wherein the initial feature points correspond to response positions obtained through large-scale searching and are typically located in visually salient, repetitive, or structurally distinguishable regions.

In implementation, the feature template is used as a query reference to perform similarity computation at each spatial position on the target feature map, response values are assigned to respective positions, and a plurality of local peak positions are extracted according to response intensities as initial feature points.

Since this stage emphasizes coverage and detection capability over the entire image, the initial feature points serve as a basis for subsequent refinement and reflect an overall distribution of the target pattern, thereby transforming full-image searching into a hierarchical extraction process guided by reference points, reducing local search complexity and improving matching stability under repetitive pattern scenarios.
obtaining corresponding spatial offset information according to a spatial positional relationship between a preset target to be extracted and the initial feature points;

Specifically, after taking the initial feature points as reference points, the spatial offset information is determined based on a preset spatial positional relationship between the preset target to be extracted and the initial feature points, so as to utilize a stable positional relationship among features within a same pattern to infer unknown positions from known positions.

The spatial positional relationship represents relative offset states of the preset target with respect to the initial feature points in horizontal and vertical directions, and may be expressed as average offsets, directional relationships, or statistically derived layout parameters, wherein in implementation, corresponding relationships may be obtained from annotated or correctly recognized samples to calculate and store stable spatial offset information, and when multiple initial feature points exist, respective offset relationships are established to improve robustness of subsequent position prediction.
determining a target position of the preset target to be extracted in the target feature maps based on the spatial offset information, and determining local regions of interest according to the target position;
Specifically, after obtaining the spatial offset information, an approximate target position is determined based on initial feature points and corresponding offsets, and a local region of interest is defined around the target position, thereby converting global coarse localization into localized directional searching.

In implementation, predicted positions are obtained by superimposing the spatial offset information onto coordinates of corresponding anchor points, and local regions of interest are defined with the predicted positions as centers, wherein sizes of the local regions are determined according to target size, texture complexity, and pattern repetition, and optionally adjusted to ensure coverage of the target and contextual information while reducing irrelevant background, so that subsequent local feature matching within constrained regions reduces interference from repetitive patterns and improves accuracy of candidate feature point generation.
performing local feature matching in each of the local regions of interest based on a feature template corresponding to the preset target to be extracted to obtain a candidate feature point set;
Specifically, after establishing the local regions of interest, local feature matching is performed within each region by comparing the feature template with features at respective positions in the regions, so as to identify positions corresponding to the preset target within a constrained spatial range, thereby focusing on finer structural differences relative to global matching.

Since the local regions of interest are constrained by spatial offset information, features therein exhibit stronger correlation with the preset target, and similarity responses between the feature template and local features are computed to form response distributions, from which peak positions are extracted to obtain the candidate feature point set.

For regions with complex textures or high repetition, unreasonable positions are further removed by combining neighborhood constraints, response threshold control, or local peak suppression, thereby refining the candidate feature point set into locally reliable positions and reducing false detections.
extracting target features at different scales for the candidate feature point set, wherein the target features comprise local features and contextual features;
specifically, after obtaining the candidate feature point set, multi-scale feature extraction is performed to determine whether candidate positions correspond to a preset target, wherein the local features describe fine-grained information such as texture details and edge variations within a small neighborhood, and the contextual features describe larger-scale information such as surrounding pattern distribution and spatial context.

In implementation, feature representations within different receptive fields are extracted around each candidate feature point and organized as multi-scale target features, so as to jointly evaluate local detail consistency and global contextual coherence, thereby improving reliability in distinguishing true target positions from false candidates.
re-ranking and filtering the candidate feature point set based on feature matching results between the target features and the feature template;
Specifically, after extracting target features at different scales, the candidate feature points are re-ranked according to matching reliability and filtered to remove positions that do not satisfy preset requirements, wherein the matching results are determined based on combined relationships among the feature template, local features, and contextual features.
in implementation, matching scores at multiple scales are calculated and fused according to preset weights, and candidate feature points with inconsistent local details or contextual features are assigned lower rankings or removed, so that retained candidate points satisfy both detail and contextual consistency, thereby improving accuracy and stability of subsequent control point extraction.
performing verification, addition/deletion, and position correction processing on filtered candidate feature points to determine the control point set after correction.

Specifically, specifically, after re-ranking and filtering, the retained candidate feature points are further processed to address errors caused by scanning deformation, occlusion, incomplete textures, or pattern repetition, wherein verification is performed to determine whether each candidate feature point conforms to semantic positions and spatial distribution rules of a preset target, addition/deletion is performed to remove incorrect points and supplement missing key points, and position correction is performed to refine coordinates of candidate feature points with positional deviations so that they more accurately correspond to actual positions of a target structure.
in implementation, the processing may be performed point by point with assistance of human interaction, local image visualization, neighborhood relationships, and known distribution patterns, so that the resulting control point set satisfies quantity requirements and exhibits improved semantic consistency and positional accuracy, thereby providing a reliable basis for subsequent target control point distribution construction, triangular region partitioning, and rectified image generation.

Specifically, as shown in FIG. 19, a process of constructing a complete control point set by adding control points and performing region-by-region searching based on anchor guidance is illustrated. First, an initial anchor point 41 is selected in an entire image, wherein the initial anchor point corresponds to a reference position in a pattern structure. A local region 42 in which the initial anchor point is located is determined by taking the initial anchor point as a center, and the local region comprises a plurality of pattern units having similar structures. Within the local region, an anchor point position 43 corresponding to the initial anchor point is determined by matching or recognizing the pattern structure, thereby establishing an initial positioning reference.

After the initial anchor point is obtained, a control point adding operation is performed in the image, and control points for subsequent positioning are established at a plurality of pattern structure positions in the image, thereby forming an image region 44 comprising a plurality of control points. In the image region, each pattern unit is internally provided with a corresponding control point position, wherein an exemplary control point position is denoted as 45. The control points are used to describe spatial positional relationships of the pattern structures in the image and serve as a matching basis in subsequent searching processes.

Subsequently, by taking the control points as references, a control point searching process is performed in different regions of the entire image, that is, pattern positions corresponding to current control point structures are searched in a plurality of local regions, thereby obtaining new control point sets. Control point sets detected in the local regions are denoted as 46, and the control points respectively correspond to pattern unit structures in different regions.

Finally, the control points detected in respective local regions are uniformly aggregated to form a complete control point set covering the entire image. In this manner, control point distribution is gradually expanded from the initial anchor point, so that the control points form a stable and continuous spatial structure in the entire image, thereby providing a reliable control point basis for subsequent image registration, pattern positioning, and geometric correction during a printing process.

In an optional embodiment, performing texture feature enhancement processing on the base images and extracting target feature maps from enhanced images by using the pre-trained feature pre-extraction model
performing contrast limited adaptive histogram equalization on the base images to enhance dark-region texture information in the base images, thereby obtaining enhanced images;
Specifically, the core function of the contrast limited adaptive histogram equalization is to enhance texture information in dark regions of the base images without significantly amplifying noise or causing distortion in high-brightness regions. The base images are often obtained from large-scale scanning results of a substrate, and may include not only pattern bodies but also fabric textures, shadows, wrinkles, or locally underexposed regions. If feature extraction is directly performed on original images, problems such as loss of fine details, blurred boundaries, and insufficient local texture responses may occur. In implementation, the base images may be divided into a plurality of local regions, and grayscale distributions are respectively calculated within each local region to perform adaptive equalization, so that contrast in each region is enhanced according to its own brightness characteristics. Meanwhile, contrast gain is limited to prevent excessive local enhancement that may introduce pseudo edges or amplify noise.

After such processing, edges of petals, textures of stamens, vein directions of leaves, and internal hierarchical structures of patterns become clearer. The enhanced images can more fully preserve structural details on surfaces of substrates, thereby providing higher-quality input for subsequent construction of high-dimensional feature maps and improving stability of feature extraction in scenarios involving complex patterns.
inputting the enhanced images into the feature pre-extraction model to obtain corresponding high-dimensional feature maps;
Specifically, after obtaining the enhanced images, the enhanced images are input into the feature pre-extraction model to generate high-dimensional feature maps, thereby transforming image information at a pixel level into deep feature representations more suitable for comparison and matching. The feature pre-extraction model may be understood as a model that has learned texture structures and pattern semantics from a large number of image samples, such that output high-dimensional feature maps encode not only intensity information but also local textures, edge patterns, regional structures, and contextual relationships within a certain range.

In implementation, after the enhanced images are input into the model, multi-channel feature information of patterns on the substrate is extracted at different hierarchical levels, while spatial layout relationships corresponding to original images are preserved, thereby generating the high-dimensional feature maps. Since each position in the high-dimensional feature maps corresponds to a local region in the original images, subsequent operations such as target searching, region cropping, and position mapping may be performed in a feature space. By adopting such processing, even if the base images exhibit color variations, slight deformations, or locally repetitive textures, the high-dimensional feature maps can represent structural differences of patterns in a more robust manner, thereby providing a basis for subsequent target localization and dimensionality reduction processing.
determining a plurality of marker points based on center positions of a plurality of regions of interest selected by a user in the base images, and mapping position coordinates of the marker points onto the high-dimensional feature maps;
Specifically, a plurality of marker points are determined based on center positions of a plurality of targets of interest selected by a user in the base images, and position coordinates of the marker points are mapped onto the high-dimensional feature maps, which serves as a key step for accurately transferring user-provided prior target information into a feature space. The targets of interest are typically pattern units or local structures that are representative for subsequent matching and rectification, and the center positions are coarse positioning reference points provided by the user in the base images. The accuracy of the center positions does not need to reach a pixel level, but should approximately fall within main regions of corresponding targets.

In implementation, planar coordinates of the marker points in the base images may be first recorded, and then converted into corresponding coordinate positions in the high-dimensional feature maps according to size correspondence, scaling relationships, or stride relationships between the high-dimensional feature maps and the base images. After mapping, the marker points are no longer merely manual selection results in the original images, but become feature-space anchor points capable of directly guiding feature region cropping and local dimensionality reduction analysis. By adopting such a manner, semantic accuracy of manually selected targets of interest is preserved, while computational burden and risks of incorrect selection caused by indiscriminate searching over entire high-dimensional feature maps are reduced, thereby enabling more targeted extraction of local high-dimensional feature regions and improving efficiency and reliability of constructing target feature maps.
extracting, from the high-dimensional feature maps, a plurality of local high-dimensional feature regions centered on the mapped marker points according to adjustable cropping regions;
Specifically, by taking each of the mapped marker points as a center, a plurality of local high-dimensional feature regions are extracted from the high-dimensional feature maps, which essentially corresponds to further cropping local feature subspaces related to targets of interest around determined target positions, so as to establish a more representative basis for subsequent dimensionality reduction. The cropping regions are configured to be adjustable because different targets of interest may vary in scale, texture complexity, and separation from surrounding patterns. If a cropping range is too small, main structures of the targets may not be fully covered, resulting in insufficient contextual information; whereas if the cropping range is too large, excessive irrelevant background textures may be introduced, thereby weakening a focus of subsequent dimensionality reduction processing on target features.

In implementation, each cropping region may be centered on the coordinates of the corresponding marker point in the high-dimensional feature map, and may be determined according to the size of the target pattern, edge distribution, and neighboring interference conditions. The cropping regions may also be adjusted through human interaction when necessary, so that each local high-dimensional feature region contains core structures of corresponding targets of interest while retaining a certain range of contextual texture information. The obtained plurality of local high-dimensional feature regions respectively represent local feature distributions of multiple targets of interest, thereby providing more sufficient data support for extracting stable dimensionality reduction directions from representative regions and enabling construction of the target feature maps to balance local structural sensitivity and overall computational efficiency.
performing principal component analysis dimensionality reduction on the plurality of local high-dimensional feature regions, and retaining a preset proportion of principal component energy to obtain local dimensionality-reduced feature vectors and corresponding dimensionality reduction transformation parameters;
Specifically, principal component analysis is performed on the plurality of local high-dimensional feature regions to extract principal components that reflect differences of targets of interest while compressing redundant feature dimensions, wherein correlated or low-contribution feature channels are suppressed to reduce computational cost and noise interference, and effective information distributed across high-dimensional channels is projected into a lower-dimensional feature subspace.
the principal component energy represents a contribution degree of retained principal components to overall feature information, and the preset proportion is used to balance structural feature retention and dimensionality reduction, wherein principal component directions and corresponding energy distributions are calculated based on the local high-dimensional feature regions, and principal components satisfying the preset proportion are selected to form the local dimensionality-reduced feature vectors and the dimensionality reduction transformation parameters, so that discriminative texture structures are preserved while redundant information is compressed, thereby improving compactness, stability, and suitability for subsequent matching and localization.
applying the dimensionality reduction transformation parameters to the high-dimensional feature maps to perform global dimensionality reduction, thereby obtaining the target feature maps with reduced dimensionality.
specifically, the dimensionality reduction transformation parameters, which are jointly extracted from a plurality of local high-dimensional feature regions and represent structural characteristics of targets in the base images, are applied to the high-dimensional feature maps to perform overall dimensionality reduction processing, so as to extend effective dimensionality reduction patterns learned from local regions to the entire feature maps.

In implementation, the high-dimensional feature maps are projected or transformed along a channel dimension according to the dimensionality reduction transformation parameters, such that high-dimensional feature representations are uniformly mapped into a lower-dimensional feature space while maintaining spatial layout relationships unchanged; the obtained low-dimensional target feature maps retain primary texture structures and semantic distributions related to the targets of interest, while significantly reducing feature redundancy and computational burden, and, due to integration of information from multiple local regions corresponding to marker points, exhibit enhanced specificity and consistency for target patterns, thereby facilitating stable execution of subsequent processes including region-of-interest localization, global feature matching, and control point set extraction, and improving overall processing efficiency.

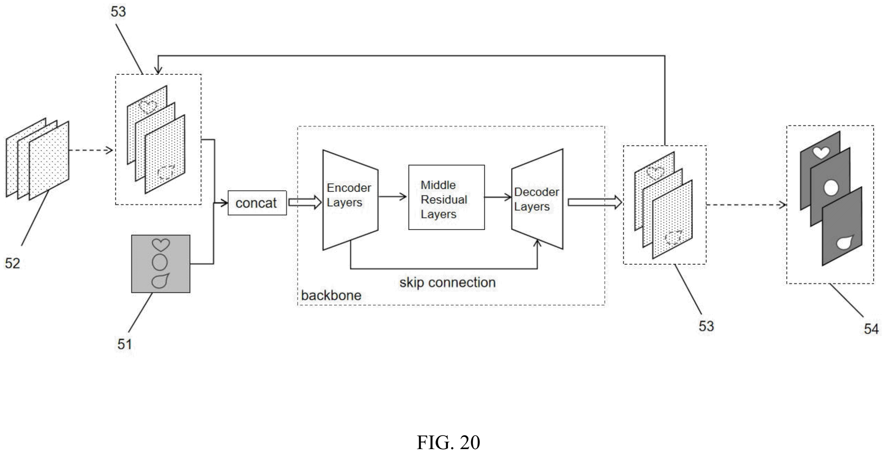

In an optional embodiment, as shown in FIG. 20, inputting the real-time image of the substrate into the image generation model to obtain the printing image comprises: first acquiring a real-time image corresponding to the substrate when the substrate enters a printing region, and performing size adjustment and grayscale processing on the real-time image to obtain a grayscale image 51; and generating, based on the grayscale image 51, an initial noise image 52 having a same resolution as the grayscale image 51.

Subsequently, the grayscale image 51 is used as a condition image and is concatenated with the initial noise image 52 along a channel dimension to obtain a first-step input image. The first-step input image is input into the image generation model for inference to obtain a first-step generated image result. The image generation model comprises a multi-step image generation model constructed based on rectified flow match, and a backbone of the model adopts a UNet architecture. The UNet architecture comprises an encoding layer, an intermediate residual layer, and a decoding layer, and feature information is transmitted between the encoding layer and the decoding layer through skip connections so as to achieve fusion of feature information at different levels.

Thereafter, the first-step generated image result is concatenated again with the grayscale image 51 along the channel dimension to obtain a second-step input image, and the second-step input image is input into the multi-step image generation model for inference to obtain a second-step generated image result. In subsequent processes, the above concatenation and model inference steps are repeatedly performed, so that an i-th step generated image result 53 is used as a part of a next-step input and is iteratively updated. In each iteration process, noise components in the image are gradually reduced, and pattern structure information and detail features are continuously enhanced, until a preset number of iterations is reached, and an output result image 54 is obtained, wherein i is a positive integer and i is less than or equal to the preset number of iterations, and the result image 54 is determined as the printing image.

By adopting the above manner, the grayscale image 51 continuously provides structural constraints throughout the generation process, and the i-th step generated image result 53 progressively approaches a target pattern during iteration, so that the final printing image 54 can be matched with a current actual state of the substrate, thereby improving stability and accuracy of image generation.

### Embodiment 2

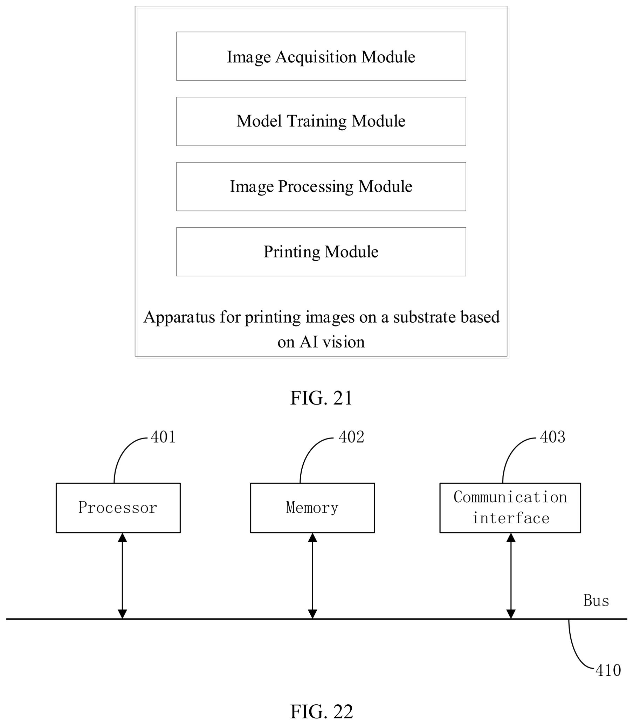

Referring to FIG. 21, an embodiment of the present invention provides an apparatus for printing images on a substrate based on AI vision, comprising:
an image acquisition module configured to acquire base images and design images corresponding to a substrate to be printed;
a model training module configured to train a deep learning network model based on the base images and the design images to obtain an image generation model;
an image processing module configured to input a real-time image of the substrate into the image generation model to obtain a printing image; and
a printing module configured to perform printing on the substrate based on the printing image.

It should be noted that, in the present embodiment, respective modules and units of the apparatus for printing images on a substrate based on AI vision correspond one-to-one with respective steps in the method for printing images on a substrate based on AI vision described in the foregoing embodiments. Therefore, specific implementation of the present embodiment may refer to the embodiments of the method for printing images on a substrate based on AI vision, and details thereof are not repeated herein.

### Embodiment 3

In addition, the method for printing images on a substrate based on AI vision described with reference to FIG. 1 in the embodiments of the present invention may be implemented by a printing device. FIG. 22 illustrates a schematic diagram of a hardware structure of a printing device according to an embodiment of the present invention. The printing device includes a processor and a memory storing computer program instructions. The processor may be a CPU, ASIC, or other integrated circuits, while the memory may include RAM, ROM, flash memory, or other non-transitory storage media. The processor executes the instructions to implement AI-vision-based image printing on a substrate.

The device may further include a communication interface and a bus connecting all components for data exchange. The bus can be any suitable hardware or software interconnect.

The invention may be implemented as a method, system, or computer program product, in hardware, software, or a combination thereof. Program instructions may be stored in computer-readable media and executed by a processor to perform the described functions.

The described embodiments are illustrative only. The method steps may be adjusted in sequence or executed in parallel, and modifications or equivalent substitutions fall within the scope of the invention.

## Claims

1. A method for printing images on a substrate based on AI vision, wherein the method comprises following steps:
acquiring base images and design images corresponding to a substrate to be printed;
training a deep learning network model based on the base images and the design images to obtain an image generation model;
inputting a real-time image of the substrate into the image generation model to obtain a printing image; and
performing printing on the substrate based on the printing image.

2. The method according to claim 1, wherein acquiring the base images and the design images corresponding to the substrate to be printed comprises:
acquiring a preset image segmentation manner and an original acquired image of the substrate, wherein the preset image segmentation manner comprises a whole-pattern segmentation manner, a row-wise pattern segmentation manner, and a smallest repeating unit segmentation manner;
segmenting the original acquired image according to the preset image segmentation manner to obtain the base images, wherein the base images comprise a region image having a plurality of complete pattern repeating units, a region image having smallest pattern repeating row units, and a region image having smallest pattern repeating units; and
performing edge outlining and/or filling processing on material textures in the base images to determine the design images.

3. The method according to claim 2, wherein segmenting the original acquired image according to the preset image segmentation manner to obtain the base images comprises:
segmenting the original acquired image according to the preset image segmentation manner to obtain local region images;
acquiring, according to the preset image segmentation manner, an image replication strategy and an image stitching strategy corresponding to the local region images, wherein the image replication strategy is used to determine a number of replications or a number of replication frames, and the image stitching strategy is used to determine a stitching direction, a stitching sequence, and a stitching layout; and
replicating and stitching the local region images according to the image replication strategy and the image stitching strategy to obtain the base images.

4. The method according to claim 1, wherein training the deep learning network model based on the base images and the design images to obtain the image generation model comprises:
performing deformation processing on the base images and the design images to obtain first deformed images corresponding to the base images and second deformed images corresponding to the design images;
performing encoding processing on horizontal positions and vertical positions of pixel points in the first deformed images, and on horizontal positions and vertical positions of pixel points in the second deformed images, respectively, to obtain original horizontal position encodings and original vertical position encodings;
performing normalization processing on the original horizontal position encodings and the original vertical position encodings to obtain normalized horizontal position encodings and normalized vertical position encodings;
concatenating the normalized horizontal position encodings and/or the normalized vertical position encodings with original channels of corresponding pixel points to obtain concatenated target pixel points; and
determining the deformed image pairs according to the concatenated target pixel points;
performing uniform grid sampling and random position sampling on the deformed image pairs, respectively, to construct a plurality of training image pairs; and
training the deep learning network model according to the training image pairs to obtain the image generation model.

5. The method according to claim 1, wherein training the deep learning network model based on the base images and the design images to obtain the image generation model comprises:
performing binarization segmentation on the design images to obtain binarized images for distinguishing foreground regions from background regions;
sampling the binarized images and the base images, respectively, to obtain training image pairs; and
training the deep learning network model according to the training image pairs to obtain the image generation model.

6. The method according to claim 5, wherein inputting the real-time image of the substrate into the image generation model to obtain the printing image comprises:
inputting the real-time image of the substrate into the image generation model to obtain a mask image;
performing global feature extraction on the mask image and the design images to determine first global feature information corresponding to the mask image and second global feature information corresponding to the design images;
performing feature matching on the first global feature information and the second global feature information to calculate an initial affine transformation matrix;
performing initial alignment on the mask image and the design images according to the initial affine transformation matrix to determine initially aligned design images; and
performing local deformable template matching on the initially aligned design images and the mask image to obtain the printing image.

7. The method according to claim 1, wherein the image generation model comprises a first-stage image generation model and a second-stage image generation model, and training the deep learning network model based on the base images and the design images to obtain the image generation model comprises:
obtaining original semantic segmentation maps corresponding to the base images;
performing elastic deformation processing with identical parameters on the base images and the original semantic segmentation maps corresponding to the base images to obtain first training base images and first training semantic segmentation maps;
performing uniform sampling or random sampling on the first training base images and the first training semantic segmentation maps by using sampling windows with identical coordinate values to obtain first sub-training images and second sub-training images, wherein each first sub-training image and the corresponding second sub-training image form a first training image pair;
using the second sub-training images as supervision labels, and inputting the first training image pairs into a first deep neural network model for training to obtain the first-stage image generation model;
performing elastic deformation processing with identical parameters on training input semantic segmentation maps for training the second-stage image generation model and the design images to obtain second training semantic segmentation maps and second training design images;
performing uniform sampling or random sampling on the second training semantic segmentation maps and the second training design images by using sampling windows with identical coordinate values to obtain third sub-training images and fourth sub-training images, wherein each third sub-training image and the corresponding fourth sub-training image form a second training image pair; and
using the fourth sub-training images as supervision labels, and inputting the second training image pairs into a second deep neural network model for training to obtain the second-stage image generation model.

8. The method according to claim 1, wherein the image generation model comprises a first image generation model and a second image generation model, and training the deep learning network model based on the base images and the design images to obtain the image generation model comprises:
obtaining, according to the base images, a first shape mask set, wherein the first shape mask set comprises a plurality of different first shape masks representing homomorphic heterochromatic pattern elements in the base images, and the homomorphic heterochromatic pattern elements are determined according to the design images;
using the base images as input and the first shape mask set as labels to train a first deep learning model, thereby obtaining the first image generation model;
splitting each of the first shape masks into a plurality of color-shape sub-masks according to color information of corresponding homomorphic heterochromatic pattern elements in the design images, and combining the color-shape sub-masks from different first shape masks to obtain a training color mask set comprising a plurality of training color masks; and
using the training color mask set as input and the design images as labels to train a second deep learning model, thereby obtaining the second image generation model.

9. The method according to claim 8, wherein obtaining, according to the base images, a first shape mask set, comprises:
classifying homomorphic heterochromatic pattern elements in the design images or the base images and extracting contours thereof to obtain a plurality of the first shape masks, wherein the first shape mask is a contour mask of the homomorphic heterochromatic pattern element, each first shape mask corresponds to one type of homomorphic heterochromatic pattern element; or
marking homomorphic heterochromatic pattern elements in the design images and the base images; and
extracting contours of preset shapes having corresponding sizes according to sizes of the marked homomorphic heterochromatic pattern elements to obtain a plurality of the first shape masks, wherein the first shape mask is configured to mark a preset shape of the homomorphic heterochromatic pattern element, each first shape mask corresponds to one type of homomorphic heterochromatic pattern element, and the preset shape is circular, elliptical, or rounded rectangular.

10. The method according to claim 8, wherein splitting each of the first shape masks into a plurality of color-shape sub-masks according to color information of corresponding homomorphic heterochromatic pattern elements in the design images, and combining the color-shape sub-masks from different first shape masks to obtain a training color mask set comprising a plurality of training color masks, comprises:
denoting the first shape masks as ShapeMask1, ShapeMask2, ..., ShapeMaskN, wherein N is a number of the first shape masks;
obtaining a number i of color variants corresponding to pattern elements of ShapeMask1 in the design images, splitting ShapeMask1 into i first color-shape sub-masks, and forming i color-shape channels based on the i first color-shape sub-masks;
obtaining a number j of color variants corresponding to pattern elements of ShapeMask2 in the design images, and splitting ShapeMask2 into j second color-shape sub-masks; if j is less than or equal to a current number of established color-shape channels, placing the j second color-shape sub-masks into the existing color-shape channels in a one-to-one correspondence; if j is greater than the current number of color-shape channels, placing a number of second color-shape sub-masks equal to the current number of color-shape channels into the existing color-shape channels in a one-to-one correspondence, generating a number of new color-shape channels equal to j minus the current number of color-shape channels, and placing remaining second color-shape sub-masks into the newly generated color-shape channels, thereby obtaining j color-shape channels;
repeating above process for each of the first shape masks, splitting each first shape mask according to a number of color variants of corresponding pattern elements in the design images and placing resulting color-shape sub-masks into respective color-shape channels, thereby obtaining k color-shape channels, wherein k is a maximum number of color variants corresponding to pattern elements among the first shape masks; and
combining all color-shape sub-masks in each color-shape channel to obtain corresponding training color masks, thereby obtaining the training color mask set comprising k training color masks.

11. The method according to claim 1, wherein acquiring the base images and the design images corresponding to the substrate to be printed comprises:
performing texture feature enhancement processing on the base images and extracting target feature maps from enhanced images by using a pre-trained feature pre-extraction model;
determining, based on target indication information input by a user, a region of interest corresponding to a target pattern in the target feature maps, and extracting a feature template corresponding to the region of interest;
performing global feature matching on the feature template and the target feature maps to obtain a control point set for representing distribution of the target pattern in the base images;
determining, based on the control point set, target control point distributions corresponding to respective target patterns in the design images;
performing triangular region partitioning on the base images and the design images, respectively, based on the control point set and the target control point distributions, and rectifying the base images according to geometric transformation relationships between corresponding triangular regions to obtain rectified images; and
extracting at least one pattern repeating unit from the rectified images, and generating corresponding design image units based on the at least one pattern repeating unit and performing extended arrangement on the design image units to obtain the design images corresponding to the base images.

12. The method according to claim 11, wherein the control point set comprises a plurality of initial feature points, after performing global feature matching on the feature template and the target feature maps to obtain the control point set representing distribution of the target pattern in the base images, the method further comprises:
obtaining corresponding spatial offset information according to a spatial positional relationship between a preset target to be extracted and the initial feature points;
determining a target position of the preset target to be extracted in the target feature maps based on the spatial offset information, and determining local regions of interest according to the target position;
performing local feature matching in each of the local regions of interest based on a feature template corresponding to the preset target to be extracted to obtain a candidate feature point set;
extracting target features at different scales for the candidate feature point set, wherein the target features comprise local features and contextual features;
re-ranking and filtering the candidate feature point set based on feature matching results between the target features and the feature template; and
performing verification, addition/deletion, and position correction processing on filtered candidate feature points to determine the control point set after correction.

13. The method according to claim 11, wherein performing texture feature enhancement processing on the base images and extracting target feature maps from enhanced images by using the pre-trained feature pre-extraction model comprises:
performing contrast limited adaptive histogram equalization on the base images to enhance dark-region texture information in the base images, thereby obtaining enhanced images;
inputting the enhanced images into the feature pre-extraction model to obtain corresponding high-dimensional feature maps;
determining a plurality of marker points based on center positions of a plurality of regions of interest selected by a user in the base images, and mapping position coordinates of the marker points onto the high-dimensional feature maps;
extracting, from the high-dimensional feature maps, a plurality of local high-dimensional feature regions centered on the mapped marker points according to adjustable cropping regions;
performing principal component analysis dimensionality reduction on the plurality of local high-dimensional feature regions, and retaining a preset proportion of principal component energy to obtain local dimensionality-reduced feature vectors and corresponding dimensionality reduction transformation parameters; and
applying the dimensionality reduction transformation parameters to the high-dimensional feature maps to perform global dimensionality reduction, thereby obtaining the target feature maps with reduced dimensionality.

14. An apparatus for printing images on a substrate based on AI vision, comprising:
an image acquisition module configured to acquire base images and design images corresponding to a substrate to be printed;
a model training module configured to train a deep learning network model based on the base images and the design images to obtain an image generation model;
an image processing module configured to input a real-time image of the substrate into the image generation model to obtain a printing image; and
a printing module configured to perform printing on the substrate based on the printing image.

15. A printing device, comprising: at least one processor, at least one memory, and computer program instructions stored in the memory, wherein the computer program instructions, when executed by the processor, cause the printing device to implement the method according to any one of claims 1-13.
